# EUROPEAN PATENT APPLICATION

(11) **EP 4 668 996 A1**
(43) Date of publication of application: **24.12.2025**
(21) Application number: 24756014.7
(22) Date of filing: 01.02.2024
(51) Int. Cl.: H04W 72/54

(54) **COMMUNICATION METHOD AND RELATED APPARATUS**

(30) Priority: 16.02.2023 CN 202310185120
(71) Applicant: Huawei Technologies Co., Ltd., Shenzhen, Guangdong 518129 (CN)
(72) Inventor: FAN, Qiang, Shenzhen, Guangdong 518129 (CN); PENG, Wenjie, Shenzhen, Guangdong 518129 (CN); CAI, Tao, Shenzhen, Guangdong 518129 (CN)
(74) Representative: Roth, Sebastian
(86) International application number: PCT/CN2024/075276
(87) International publication number: WO 2024/169640

(57) **Abstract**

A communication method and a related apparatus are provided. The method includes: receiving first information from a network device, where the first information is used to request a first burst arrival time BAT corresponding to a first uplink service; and sending second information to the network device, where the second information includes information about the first BAT, and the first BAT is determined based on an uplink frame boundary of a terminal device. In the method, the first BAT determined by using the uplink frame boundary of the terminal device as a reference is reported to the network device, so that the network device can be promptly aware of the burst arrival time of data packets of the first uplink service of the terminal device. This reduces a latency of waiting for transmission resources by the uplink service data packets, and meets low-latency requirements.

## Description

This application claims priority to China Patent Application No. 202310185120.2, filed with the China National Intellectual Property Administration on February 16, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Ultra-reliable low-latency communication (ultra-reliable low-latency communication, URLLC) services have stringent requirements for quality-of-service (quality-of-service, QoS), specifically high reliability and low latency. For example, a data transmission latency for URLLC services needs to meet a packet delay budget (packet delay budget, PDB) requirement of within 2 ms. For a base station, if URLLC service data packets from most user equipments (user equipments, UEs) served by the base station all arrive at an air interface side of the base station in a short period of time, it becomes challenging for a base station scheduler to allocate appropriate transmission resources for these data packets to successfully transmit all these data packets within a needed PDB.

At present, it is possible to stagger arrival times of URLLC service data packets from different UEs to the air interface side of the base station by adjusting generation times of the URLLC service data packets. This allows the base station scheduler to better allocate transmission resources for these data packets, thereby meeting low-latency requirements of more UEs.

However, currently, the base station is unable to be promptly aware of a burst arrival time (burst arrival time, BAT) of URLLC uplink service data packets of UEs, which may result in significant BAT drift. Consequently, a latency of waiting for transmission resources by the uplink service data packets increases, making it difficult to meet low-latency requirements.

### SUMMARY

Embodiments of this application provide a communication method and a related apparatus, to allow a base station to be promptly aware of a BAT of URLLC uplink service data packets of UEs. This reduces a latency of waiting for transmission resources by the uplink service data packets, and meets low-latency requirements.

According to a first aspect, an embodiment of this application provides a communication method, and the method may be performed by a communication apparatus. The communication apparatus may be a device, or may be a chip (system) or a circuit used for the device. This is not limited in this application. The method includes:
receiving first information from a network device, where the first information is used to request a first burst arrival time BAT corresponding to a first uplink service; and
sending second information to the network device, where the second information includes information about the first BAT, and the first BAT is determined based on an uplink frame boundary of a terminal device.

In this embodiment of this application, the communication method is provided. The terminal device receives the first information from the network device, and sends the second information to the network device. The terminal device herein may be alternatively a processor/chip that may be configured to execute computer executable instructions. This is not limited in embodiments of this application.

The first information in this embodiment of this application is used to request the first burst arrival time (burst arrival time, BAT) corresponding to the first uplink service. The second information in this embodiment of this application includes the information about the first BAT, and the first BAT is determined based on the uplink frame boundary of the terminal device. A frame boundary of the network device is not aligned with a downlink frame boundary of the terminal device, and a downlink transmission latency deviation exists between the frame boundary of the network device and the downlink frame boundary of the terminal device. Additionally, the uplink frame boundary and the downlink frame boundary of the terminal device are also not aligned with each other, and the uplink frame boundary is ahead of the downlink frame boundary by a timing advance (timing advance, TA) value. However, the network device may not be able to track an accurate TA value of the terminal device. Therefore, the first BAT determined by using the uplink frame boundary of the terminal device as a reference is reported to the network device, so that the network device can be promptly aware of the burst arrival time of data packets of the first uplink service of the terminal device even if the network device does not know the accurate TA value, to allocate appropriate uplink transmission resources to the terminal device. This reduces a latency of waiting for transmission resources by the uplink service data packets, and meets low-latency requirements.

In this embodiment of this application, the network device requests the terminal device to report the BAT of the first uplink service, and the terminal device reports the first BAT determined by using the uplink frame boundary as a reference to the network device, so that the network device can be promptly aware of the burst arrival time of data packets of the first uplink service of the terminal device. This reduces the latency of waiting for transmission resources by the uplink service data packets, and meets the low-latency requirements.

According to a second aspect, an embodiment of this application provides a communication method, and the method may be performed by a communication apparatus. The communication apparatus may be a device, or may be a chip (system) or a circuit used for the device. This is not limited in this application. The method includes:
receiving first information from a network device, where the first information is used to request a first burst arrival time BAT corresponding to a first uplink service; and
sending second information to the network device, where the second information includes information about the first BAT, and the first BAT is determined based on a downlink frame boundary and a timing advance TA value of a terminal device.

In this embodiment of this application, the communication method is provided. The terminal device receives the first information from the network device, and sends the second information to the network device. The terminal device herein may be alternatively a processor/chip that may be configured to execute computer executable instructions. This is not limited in embodiments of this application.

The first information in this embodiment of this application is used to request the first BAT corresponding to the first uplink service. The second information in this embodiment of this application includes the information about the first BAT, and the first BAT is determined based on the downlink frame boundary and the TA value of the terminal device. A frame boundary of the network device is not aligned with the downlink frame boundary of the terminal device, a downlink transmission latency deviation exists between the frame boundary of the network device and the downlink frame boundary of the terminal device, an uplink frame boundary and the downlink frame boundary of the terminal device are not aligned with each other, the uplink frame boundary is ahead of the downlink frame boundary by a TA value, and the network device may not be able to track an accurate TA value of the terminal device. If the first BAT is determined by using the downlink frame boundary, the network device cannot determine a location at which an uplink transmission resource should be allocated to the terminal device. Therefore, the first BAT determined by using the downlink frame boundary and the TA value of the terminal device as a reference is reported to the network device. In other words, the first BAT in this case is a sum of an actual arrival time of an uplink service data packet and the TA value. The network device can be promptly aware of the burst arrival time of data packets of the first uplink service of the terminal device, to allocate appropriate uplink transmission resources to the terminal device. This reduces a latency of waiting for transmission resources by the uplink service data packets, and meets low-latency requirements.

In this embodiment of this application, the network device requests the terminal device to report the BAT of the first uplink service, and the terminal device reports the first BAT determined by using the downlink frame boundary and the TA value as a reference to the network device, so that the network device can be promptly aware of the burst arrival time of data packets of the first uplink service of the terminal device. This reduces the latency of waiting for transmission resources by the uplink service data packets, and meets the low-latency requirements.

According to a third aspect, an embodiment of this application provides a communication method, and the method may be performed by a communication apparatus. The communication apparatus may be a device, or may be a chip (system) or a circuit used for the device. This is not limited in this application. The method includes:
receiving first information from a network device, where the first information is used to request a first burst arrival time BAT corresponding to a first uplink service;
sending second information to the network device, where the second information includes information about the first BAT, and the first BAT is determined based on a downlink frame boundary of a terminal device; and
optionally, sending third information to the network device, where the third information includes a TA value of the terminal device.

In this embodiment of this application, the communication method is provided. The terminal device receives the first information from the network device, and sends the second information and the optional third information to the network device. The terminal device herein may be alternatively a processor/chip that may be configured to execute computer executable instructions. This is not limited in embodiments of this application.

The first information in this embodiment of this application is used to request the first BAT corresponding to the first uplink service. The second information in this embodiment of this application includes the information about the first BAT, and the first BAT is determined based on the downlink frame boundary of the terminal device. The third information in this embodiment of this application includes the TA value of the terminal device. A frame boundary of the network device is not aligned with the downlink frame boundary of the terminal device, a downlink transmission latency deviation exists between the frame boundary of the network device and the downlink frame boundary of the terminal device, an uplink frame boundary and the downlink frame boundary of the terminal device are not aligned with each other, the uplink frame boundary is ahead of the downlink frame boundary by a TA value, and the network device may not be able to track an accurate TA value of the terminal device. If the first BAT is determined by using the downlink frame boundary, the network device cannot determine a location at which an uplink transmission resource should be allocated to the terminal device. Therefore, the first BAT determined by using the downlink frame boundary of the terminal device as a reference is reported to the network device, and the TA value of the terminal device is reported to the network device. The network device can be promptly aware of the burst arrival time of data packets of the first uplink service of the terminal device, that is, a sum of the first BAT and the TA value, to allocate appropriate uplink transmission resources to the terminal device. This reduces a latency of waiting for transmission resources by the uplink service data packets, and meets low-latency requirements. Optionally, when the network device can track the TA value of the terminal device, the terminal device does not need to report the third information.

In this embodiment of this application, the second information and the third information may be carried in different fields of a same packet, or may be carried in different packets. This is not limited in embodiments of this application.

In this embodiment of this application, the network device requests the terminal device to report the BAT of the first uplink service, and the terminal device reports the first BAT determined by using the downlink frame boundary as a reference to the network device and reports the TA value of the terminal device to the network device, so that the network device can be promptly aware of the burst arrival time of data packets of the first uplink service of the terminal device. This reduces the latency of waiting for transmission resources by the uplink service data packets, and meets the low-latency requirements.

In a possible implementation of any one of the first aspect to the third aspect, the first BAT is represented by at least one of the following: a system frame number, a slot index, and a symbol index.

In an implementation of this application, a possible specific implementation of representing the first BAT is provided. Specifically, the first BAT may be represented by the system frame number (system frame number, SFN), the slot index (slot index), the symbol index (symbol index), and the like, which respectively indicate a system frame number, a slot index, and a symbol index at which the arrival moment of the data packet of the first uplink service is located.

In a possible implementation of the first aspect, the first information further indicates that the first BAT is determined based on the uplink frame boundary of the terminal device.

In an implementation of this application, a possible specific implementation of the first information is provided. Specifically, the first information further indicates that the first BAT is determined based on the uplink frame boundary of the terminal device. Optionally, when the network device cannot determine the TA value of the terminal device, the network device sends the first information to indicate the terminal device to report the first BAT determined based on the uplink frame boundary. Correspondingly, the first BAT reported by the terminal device is determined based on the uplink frame boundary.

In a possible implementation of the second aspect, the first information further indicates that the first BAT is determined based on the downlink frame boundary and the timing advance TA value of the terminal device.

In an implementation of this application, a possible specific implementation of the first information is provided. Specifically, the first information further indicates that the first BAT is determined based on the downlink frame boundary and the TA value of the terminal device. Optionally, when the network device cannot determine the TA value of the terminal device, the network device sends the first information to indicate the terminal device to report the first BAT determined based on the downlink frame boundary and the TA value. Correspondingly, the first BAT reported by the terminal device is determined based on the downlink frame boundary and the TA value.

In a possible implementation of the third aspect, the first information further indicates that the first BAT is determined based on the downlink frame boundary of the terminal device.

In an implementation of this application, a possible specific implementation of the first information is provided. Specifically, the first information further indicates that the first BAT is determined based on the downlink frame boundary of the terminal device. Optionally, when the network device can determine the TA value of the terminal device, the network device sends the first information to indicate the terminal device to report the first BAT determined based on the downlink frame boundary. Correspondingly, the first BAT reported by the terminal device is determined based on the downlink frame boundary. Optionally, when the network device cannot determine the TA value of the terminal device, the network device sends the first information to indicate the terminal device to report the first BAT determined based on the downlink frame boundary. Correspondingly, the first BAT reported by the terminal device is determined based on the downlink frame boundary. In addition, the terminal device further needs to report the TA value.

In a possible implementation of any one of the first aspect to the third aspect, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

In an implementation of this application, a possible specific implementation of the first information is provided. Specifically, the first information includes the identification information of the first uplink service, for example, the data radio bearer (data radio bearer, DRB) identifier to which the first uplink service belongs, the logical channel (logical channel, LC) identifier to which the first uplink service belongs, and the quality-of-service (quality-of-service, QoS) flow identifier (QoS flow ID, QFI) to which the first uplink service belongs. This is not limited in embodiments of this application. According to this embodiment of this application, the terminal device may be indicated, by using the identification information of the service, to report the BAT of uplink data packets of the specified service, so that the network device is promptly aware of a BAT change of the uplink service data packet of the terminal device. This reduces a latency of waiting for transmission resources by the uplink service data packets, and meets low-latency requirements.

Optionally, the first information further includes information about a periodicity of the first uplink service.

In a possible implementation of any one of the first aspect to the third aspect, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In an implementation of this application, a possible specific implementation of the second information is provided. Specifically, the second information includes the identification information of the first uplink service, for example, the DRB identifier to which the first uplink service belongs, the LC identifier to which the first uplink service belongs, and the QFI to which the first uplink service belongs. This is not limited in embodiments of this application. According to this embodiment of this application, the network device may identify, by using the service identification information included in the second information, whether the BAT reported by the terminal device is the BAT of the uplink data packet of the specified service, to be promptly aware of a BAT change of specified uplink service data packets of the terminal device. This reduces a latency of waiting for transmission resources by the uplink service data packets, and meets low-latency requirements.

In a possible implementation of any one of the first aspect to the third aspect, the first information further includes a first timer, and the method further includes:
starting the first timer when the second information is sent; and
when the BAT corresponding to the first uplink service changes and the first timer expires or does not run, reporting the BAT corresponding to the first uplink service to the network device.

In an implementation of this application, a possible specific implementation of BAT reporting is provided. Specifically, the first information further includes the first timer (prohibit timer), and the terminal device starts the first timer when sending the second information. When the first timer expires or does not run and the BAT corresponding to the first uplink service of the terminal device changes, for example, when a specific deviation exists between an actual BAT and a BAT estimated by the terminal device, the terminal device reports the BAT corresponding to the first uplink service to the network device again. In this embodiment of this application, a time point at which the terminal device starts the first timer may be specifically a time point for starting the first timer when sending of the second information is triggered, or may be a time point for starting the first timer in a process of sending the second information. This is not limited in embodiments of this application. In this embodiment of this application, that the first timer does not run means that after the terminal device completes current BAT reporting, the terminal device is prohibited from reporting the BAT corresponding to the first uplink service again. According to this embodiment of this application, the network device can be promptly aware of a BAT change of uplink service data packets of the terminal device. This reduces a latency of waiting for transmission resources by the uplink service data packets, and meets low-latency requirements.

In a possible implementation of any one of the first aspect to the third aspect, the first information further includes a second timer, and the method further includes:
starting the second timer when the second information is sent; and
when the second timer expires, reporting the BAT corresponding to the first uplink service to the network device.

In an implementation of this application, a possible specific implementation of BAT reporting is provided. Specifically, the first information further includes the second timer, and the terminal device starts the second timer when sending the second information. When the second timer expires, the terminal device reports the BAT corresponding to the first uplink service to the network device. Likewise, when reporting the BAT corresponding to the first uplink service to the network device, the terminal device starts the second timer. When the second timer expires, the terminal device reports the BAT corresponding to the first uplink service to the network device again. The rest is deduced by analogy. According to this embodiment of this application, the terminal device may be indicated, by using the second timer, to periodically report the BAT of the uplink service data packet, so that the network device is promptly aware of a BAT change of the uplink service data packet of the terminal device, to allocate appropriate transmission resources to the terminal device. This reduces a latency of waiting for transmission resources by the uplink service data packets, and meets low-latency requirements.

In a possible implementation of any one of the first aspect to the third aspect, the first information further includes a first threshold, and the method further includes:
when a deviation between an expected arrival time and an actual arrival time of a data packet of the first uplink service exceeds the first threshold, reporting the BAT corresponding to the first uplink service to the network device.

In an implementation of this application, a possible specific implementation of BAT reporting is provided. Specifically, the first information further includes the first threshold, and when the deviation between the expected arrival time and the actual arrival time of the data packet of the first uplink service exceeds the first threshold, the terminal device is triggered to report the BAT corresponding to the first uplink service to the network device. It can be understood that the first threshold is a threshold for triggering the terminal device to report the BAT. When detecting that the difference between the expected arrival time and the actual arrival time of the data packet of the first uplink service is excessively large, the terminal device reports the BAT corresponding to the first uplink service to the network device. According to this embodiment of this application, the network device may configure, by using the first threshold included in the first information, a condition for reporting the BAT corresponding to the uplink service by the terminal device, so that the terminal device can report the BAT as required. In this way, the network device can learn whether the arrival time of the uplink service data packet drifts, to help the network device allocate an appropriate uplink transmission resource. In addition, unnecessary BAT reporting that may occur can be avoided, so that signaling overheads are reduced, and occupied transmission resources are reduced.

In a possible implementation of any one of the first aspect to the third aspect, the first threshold is a time value or a time range.

In an implementation of this application, a possible specific implementation of the first threshold is provided. Specifically, the first threshold may be a time value or a time range. When the first threshold is a time value, and the deviation between the expected arrival time and the actual arrival time of the data packet of the first uplink service exceeds the time value, the terminal device is triggered to report the BAT corresponding to the first uplink service to the network device. When the first threshold is a time range, and the deviation between the expected arrival time and the actual arrival time of the data packet of the first uplink service is outside the time range, the terminal device is triggered to report the BAT corresponding to the first uplink service to the network device.

In a possible implementation of any one of the first aspect to the third aspect, the expected arrival time of the data packet of the first uplink service is determined based on a periodicity of the first uplink service and a reported second BAT, and the second BAT is a BAT reported immediately before the first BAT.

In an implementation of this application, a possible specific implementation of determining the expected arrival time of the data packet of the first uplink service is provided. Specifically, the expected arrival time of the data packet of the first uplink service is determined based on the periodicity of the first uplink service and the reported second BAT, and the second BAT is the BAT reported immediately before the first BAT. It can be understood that the expected arrival time of the data packet of the first uplink service is determined based on the BAT that is of the data packet of the first uplink service and that is reported by the terminal device last time and the periodicity value of the first uplink service.

In a possible implementation of any one of the first aspect to the third aspect, the first information further includes the periodicity of the first uplink service, or the periodicity of the first uplink service is preconfigured.

In an implementation of this application, a possible specific implementation of the periodicity of the first uplink service is provided. Specifically, the periodicity of the first uplink service may be included in the first information, may be preconfigured, may be provided by an upper layer of the terminal device for an access stratum (access stratum, AS), may be configured by a core network element like an access and mobility management function (access and mobility management function, AMF) for the terminal device by using a non-access stratum (non-access stratum, NAS) message, or the like. This is not limited in embodiments of this application. According to this embodiment of this application, the periodicity of the first uplink service may be obtained in the foregoing manner or the like, to determine the expected arrival time of the data packet of the first uplink service. In this way, the terminal device reports the BAT as required based on the condition for reporting the BAT corresponding to the uplink service.

In a possible implementation of any one of the first aspect to the third aspect, the first information further includes a third timer, and the method further includes:
starting the third timer when the second information is sent; and
when the deviation between the expected arrival time and the actual arrival time of the data packet of the first uplink service exceeds the first threshold and the third timer expires or does not run, reporting the BAT corresponding to the first uplink service to the network device.

In an implementation of this application, a possible specific implementation of BAT reporting is provided. Specifically, the first information further includes the third timer (prohibit timer), and the terminal device starts the third timer when sending the second information. When the third timer expires or does not run and the deviation between the expected arrival time and the actual arrival time of the data packet of the first uplink service of the terminal device exceeds the first threshold, the terminal device reports the BAT corresponding to the first uplink service to the network device again. In this embodiment of this application, a time point at which the terminal device starts the third timer may be specifically a time point for starting the third timer when sending of the second information is triggered, or may be a time point for starting the third timer in a process of sending the second information. This is not limited in embodiments of this application. In this embodiment of this application, that the third timer does not run means that after the terminal device completes current BAT reporting, the terminal device is prohibited from reporting the BAT corresponding to the first uplink service again. According to this embodiment of this application, the network device can be promptly aware of a BAT change of uplink service data packets of the terminal device. This reduces a latency of waiting for transmission resources by the uplink service data packets, and meets low-latency requirements.

In a possible implementation of any one of the first aspect to the third aspect, the first information further includes a second threshold, and the method further includes:
when a deviation between an expected arrival time and an actual arrival time of a data packet of the first uplink service exceeds the second threshold, sending first indication information to the network device, where the first indication information indicates that the deviation between the expected arrival time and the actual arrival time of the data packet of the first uplink service exceeds the second threshold;
receiving a request message from the network device, where the request message is used to request the BAT corresponding to the first uplink service; and
reporting the BAT corresponding to the first uplink service to the network device.

In an implementation of this application, a possible specific implementation of BAT reporting is provided. Specifically, the first information further includes the second threshold, and when the deviation between the expected arrival time and the actual arrival time of the data packet of the first uplink service exceeds the second threshold, the terminal device is triggered to send the first indication information to the network device, to indicate that the deviation between the expected arrival time and the actual arrival time of the data packet of the first uplink service exceeds the second threshold. When the terminal device receives, from the network device, the message for requesting to report the BAT corresponding to the first uplink service, the terminal device reports the BAT corresponding to the first uplink service to the network device. It can be understood that the second threshold is a threshold for triggering the terminal device to report the first indication information. When detecting that the difference between the expected arrival time and the actual arrival time of the data packet of the first uplink service is excessively large, the terminal device sends the first indication information to the network device, to indicate that the BAT of the first uplink service changes, and that the deviation between the expected arrival time and the actual arrival time of the data packet of the first uplink service exceeds the second threshold indicated by the network device. According to this embodiment of this application, the network device may configure, by using the second threshold included in the first information, a condition for sending the first indication information by the terminal device. In this way, the network device can learn whether the arrival time of the uplink service data packet drifts, to allocate appropriate transmission resources to the terminal device. This reduces a latency of waiting for transmission resources by the uplink service data packets, and meets low-latency requirements.

In a possible implementation of any one of the first aspect to the third aspect, the second threshold is a time value or a time range.

In an implementation of this application, a possible specific implementation of the second threshold is provided. Specifically, the second threshold may be a time value or a time range. When the second threshold is a time value, and the deviation between the expected arrival time and the actual arrival time of the data packet of the first uplink service exceeds the time value, the terminal device is triggered to send the first indication information to the network device. When the second threshold is a time range, and the deviation between the expected arrival time and the actual arrival time of the data packet of the first uplink service is outside the time range, the terminal device is triggered to send the first indication information to the network device.

In a possible implementation of any one of the first aspect to the third aspect, the expected arrival time of the data packet of the first uplink service is determined based on a periodicity of the first uplink service and a reported second BAT, and the second BAT is a BAT reported immediately before the first BAT.

In an implementation of this application, a possible specific implementation of determining the expected arrival time of the data packet of the first uplink service is provided. Specifically, the expected arrival time of the data packet of the first uplink service is determined based on the periodicity of the first uplink service and the reported second BAT, and the second BAT is the BAT reported immediately before the first BAT. It can be understood that the expected arrival time of the data packet of the first uplink service is determined based on the BAT that is of the data packet of the first uplink service and that is reported by the terminal device last time and the periodicity value of the first uplink service.

In a possible implementation of any one of the first aspect to the third aspect, the first information further includes the periodicity of the first uplink service, or the periodicity of the first uplink service is preconfigured.

In an implementation of this application, a possible specific implementation of the periodicity of the first uplink service is provided. Specifically, the periodicity of the first uplink service may be included in the first information, may be preconfigured, may be provided by an upper layer of the terminal device for an AS stratum, may be configured by a core network element (for example, an AMF) for the terminal device by using a NAS message, or the like. This is not limited in embodiments of this application. According to this embodiment of this application, the periodicity of the first uplink service may be obtained in the foregoing manner or the like, to determine the expected arrival time of the data packet of the first uplink service. In this way, the first indication information is sent to the network device when the deviation between the actual arrival time and the expected arrival time of the data packet of the first uplink service is excessively large.

In a possible implementation of any one of the first aspect to the third aspect, the first information further includes a fourth timer, and the method further includes:
starting the fourth timer when the first indication information is sent; and
when the deviation between the expected arrival time and the actual arrival time of the data packet of the first uplink service exceeds the second threshold and the fourth timer expires or does not run, sending the first indication information to the network device.

In an implementation of this application, a possible specific implementation of sending the first indication information is provided. Specifically, the first information further includes the fourth timer (prohibit timer), and the terminal device starts the fourth timer when sending the first indication information. When the fourth timer expires or does not run and the deviation between the expected arrival time and the actual arrival time of the data packet of the first uplink service of the terminal device exceeds the second threshold, the terminal device sends the first indication information to the network device again, to indicate that the BAT of the first uplink service changes, and that the deviation between the expected arrival time and the actual arrival time of the data packet of the first uplink service exceeds the second threshold indicated by the network device. In this embodiment of this application, a time point at which the terminal device starts the fourth timer may be specifically a time point for starting the fourth timer when sending of the first indication information is triggered, or may be a time point for starting the fourth timer in a process of sending the first indication information. This is not limited in embodiments of this application. In this embodiment of this application, that the fourth timer does not run means that after the terminal device completes current sending of the first indication information, the terminal device is prohibited from sending the first indication information again. According to this embodiment of this application, the network device can learn whether the arrival time of the uplink service data packet drifts, to allocate appropriate transmission resources to the terminal device. This reduces a latency of waiting for transmission resources by the uplink service data packets, and meets low-latency requirements.

In a possible implementation of any one of the first aspect to the third aspect, the method further includes:
when an expected arrival time and an actual arrival time of a data packet of the first uplink service do not match, sending second indication information to the network device, where the second indication information indicates that the BAT of the data packet of the first uplink service changes;
receiving a request message from the network device, where the request message is used to request the BAT corresponding to the first uplink service; and
reporting the BAT corresponding to the first uplink service to the network device.

In an implementation of this application, a possible specific implementation of BAT reporting is provided. Specifically, when the expected arrival time and the actual arrival time of the data packet of the first uplink service do not match, the terminal device sends the second indication information to the network device, to indicate that the BAT of the data packet of the first uplink service changes. When the terminal device receives, from the network device, the message for requesting to report the BAT corresponding to the first uplink service, the terminal device reports the BAT corresponding to the first uplink service to the network device. It can be understood that, that the expected arrival time and the actual arrival time of the data packet of the first uplink service do not match means that the expected arrival time and the actual arrival time of the data packet of the first uplink service are different. According to this embodiment of this application, the terminal device sends the second indication information to the network device when the expected arrival time and the actual arrival time of the data packet of the first uplink service do not match. In this way, the network device can learn whether the arrival time of the uplink service data packet drifts, to allocate appropriate transmission resources to the terminal device. This reduces a latency of waiting for transmission resources by the uplink service data packets, and meets low-latency requirements.

In a possible implementation of any one of the first aspect to the third aspect, the expected arrival time of the data packet of the first uplink service is determined based on a periodicity of the first uplink service and a reported second BAT, and the second BAT is a BAT reported immediately before the first BAT.

In an implementation of this application, a possible specific implementation of determining the expected arrival time of the data packet of the first uplink service is provided. Specifically, the expected arrival time of the data packet of the first uplink service is determined based on the periodicity of the first uplink service and the reported second BAT, and the second BAT is the BAT reported immediately before the first BAT. It can be understood that the expected arrival time of the data packet of the first uplink service is determined based on the BAT that is of the data packet of the first uplink service and that is reported by the terminal device last time and the periodicity value of the first uplink service.

In a possible implementation of any one of the first aspect to the third aspect, the first information further includes the periodicity of the first uplink service, or the periodicity of the first uplink service is preconfigured.

In an implementation of this application, a possible specific implementation of the periodicity of the first uplink service is provided. Specifically, the periodicity of the first uplink service may be included in the first information, may be preconfigured, may be provided by an upper layer of the terminal device for an AS stratum, may be configured by a core network element (for example, an AMF) for the terminal device by using a NAS message, or the like. This is not limited in embodiments of this application. According to this embodiment of this application, the periodicity of the first uplink service may be obtained in the foregoing manner or the like, to determine the expected arrival time of the data packet of the first uplink service. In this way, the second indication information is sent to the network device when the actual arrival time and the expected arrival time of the data packet of the first uplink service do not match.

In a possible implementation of any one of the first aspect to the third aspect, the first information further includes a fifth timer, and the method further includes:
starting the fifth timer when the second indication information is sent; and
when the expected arrival time and the actual arrival time of the data packet of the first uplink service do not match and the fifth timer expires or does not run, sending the second indication information to the network device.

In an implementation of this application, a possible specific implementation of sending the second indication information is provided. Specifically, the first information further includes the fifth timer (prohibit timer), and the terminal device starts the fifth timer when sending the second indication information. When the fifth timer expires or does not run and the expected arrival time and the actual arrival time of the data packet of the first uplink service of the terminal device do not match, the terminal device sends the second indication information to the network device again, to indicate that the BAT of the first uplink service changes. In this embodiment of this application, a time point at which the terminal device starts the fifth timer may be specifically a time point for starting the fifth timer when sending of the second indication information is triggered, or may be a time point for starting the fifth timer in a process of sending the second indication information. This is not limited in embodiments of this application. In this embodiment of this application, that the fifth timer does not run means that after the terminal device completes current sending of the second indication information, the terminal device is prohibited from sending the second indication information again. According to this embodiment of this application, the network device can learn whether the arrival time of the uplink service data packet drifts, to allocate appropriate transmission resources to the terminal device. This reduces a latency of waiting for transmission resources by the uplink service data packets, and meets low-latency requirements.

According to a fourth aspect, an embodiment of this application provides a communication method, and the method may be performed by a communication apparatus. The communication apparatus may be a device, or may be a chip (system) or a circuit used for the device. This is not limited in this application. The method includes:
sending first information to a terminal device, where the first information is used to request a first burst arrival time BAT corresponding to a first uplink service; and
receiving second information from the terminal device, where the second information includes information about the first BAT, and the first BAT is determined based on an uplink frame boundary of the terminal device.

In this embodiment of this application, the communication method is provided. The network device sends the first information to the terminal device, and receives the second information from the terminal device. The network device herein may be alternatively a processor/chip that may be configured to execute computer executable instructions. This is not limited in embodiments of this application.

The first information in this embodiment of this application is used to request the first burst arrival time (burst arrival time, BAT) corresponding to the first uplink service. The second information in this embodiment of this application includes the information about the first BAT, and the first BAT is determined based on the uplink frame boundary of the terminal device. A frame boundary of the network device is not aligned with a downlink frame boundary of the terminal device, a downlink transmission latency deviation exists between the frame boundary of the network device and the downlink frame boundary of the terminal device, the uplink frame boundary and the downlink frame boundary of the terminal device are not aligned with each other, the uplink frame boundary is ahead of the downlink frame boundary by a timing advance (timing advance, TA) value, and the network device may not be able to track an accurate TA value of the terminal device. Therefore, the first BAT determined by using the uplink frame boundary of the terminal device as a reference is reported to the network device, so that the network device can be promptly aware of the burst arrival time of data packets of the first uplink service of the terminal device even if the network device does not know the accurate TA value, to allocate appropriate uplink transmission resources to the terminal device. This reduces a latency of waiting for transmission resources by the uplink service data packets, and meets low-latency requirements.

In this embodiment of this application, the network device requests the terminal device to report the BAT of the first uplink service, and the terminal device reports the first BAT determined by using the uplink frame boundary as a reference to the network device, so that the network device can be promptly aware of the burst arrival time of data packets of the first uplink service of the terminal device. This reduces the latency of waiting for transmission resources by the uplink service data packets, and meets the low-latency requirements.

According to a fifth aspect, an embodiment of this application provides a communication method, and the method may be performed by a communication apparatus. The communication apparatus may be a device, or may be a chip (system) or a circuit used for the device. This is not limited in this application. The method includes:
sending first information to a terminal device, where the first information is used to request a first burst arrival time BAT corresponding to a first uplink service; and
receiving second information from the terminal device, where the second information includes information about the first BAT, and the first BAT is determined based on a downlink frame boundary and a timing advance TA value of the terminal device.

In this embodiment of this application, the communication method is provided. The network device sends the first information to the terminal device, and receives the second information from the terminal device. The network device herein may be alternatively a processor/chip that may be configured to execute computer executable instructions. This is not limited in embodiments of this application.

The first information in this embodiment of this application is used to request the first BAT corresponding to the first uplink service. The second information in this embodiment of this application includes the information about the first BAT, and the first BAT is determined based on the downlink frame boundary and the TA value of the terminal device. A frame boundary of the network device is not aligned with the downlink frame boundary of the terminal device, a downlink transmission latency deviation exists between the frame boundary of the network device and the downlink frame boundary of the terminal device, an uplink frame boundary and the downlink frame boundary of the terminal device are not aligned with each other, the uplink frame boundary is ahead of the downlink frame boundary by a TA value, and the network device may not be able to track an accurate TA value of the terminal device. If the first BAT is determined by using the downlink frame boundary, the network device cannot determine a location at which an uplink transmission resource should be allocated to the terminal device. Therefore, the first BAT determined by using the downlink frame boundary and the TA value of the terminal device as a reference is reported to the network device. In other words, the first BAT in this case is a sum of an actual arrival time of an uplink service data packet and the TA value. The network device can be promptly aware of the burst arrival time of data packets of the first uplink service of the terminal device, to allocate appropriate uplink transmission resources to the terminal device. This reduces a latency of waiting for transmission resources by the uplink service data packets, and meets low-latency requirements.

In this embodiment of this application, the network device requests the terminal device to report the BAT of the first uplink service, and the terminal device reports the first BAT determined by using the downlink frame boundary and the TA value as a reference to the network device, so that the network device can be promptly aware of the burst arrival time of data packets of the first uplink service of the terminal device. This reduces the latency of waiting for transmission resources by the uplink service data packets, and meets the low-latency requirements.

According to a sixth aspect, an embodiment of this application provides a communication method, and the method may be performed by a communication apparatus. The communication apparatus may be a device, or may be a chip (system) or a circuit used for the device. This is not limited in this application. The method includes:
sending first information to a terminal device, where the first information is used to request a first burst arrival time BAT corresponding to a first uplink service;
receiving second information from the terminal device, where the second information includes information about the first BAT, and the first BAT is determined based on a downlink frame boundary of the terminal device; and
optionally, receiving third information from the terminal device, where the third information includes a TA value of the terminal device.

In this embodiment of this application, the communication method is provided. The network device sends the first information to the terminal device, and receives the second information and the optional third information from the terminal device. The network device herein may be alternatively a processor/chip that may be configured to execute computer executable instructions. This is not limited in embodiments of this application.

The first information in this embodiment of this application is used to request the first BAT corresponding to the first uplink service. The second information in this embodiment of this application includes the information about the first BAT, and the first BAT is determined based on the downlink frame boundary of the terminal device. The third information in this embodiment of this application includes the TA value of the terminal device. A frame boundary of the network device is not aligned with the downlink frame boundary of the terminal device, a downlink transmission latency deviation exists between the frame boundary of the network device and the downlink frame boundary of the terminal device, an uplink frame boundary and the downlink frame boundary of the terminal device are not aligned with each other, the uplink frame boundary is ahead of the downlink frame boundary by a TA value, and the network device may not be able to track an accurate TA value of the terminal device. If the first BAT is determined by using the downlink frame boundary, the network device cannot determine a location at which an uplink transmission resource should be allocated to the terminal device. Therefore, the first BAT determined by using the downlink frame boundary of the terminal device as a reference is reported to the network device, and the TA value of the terminal device is reported to the network device. The network device can be promptly aware of the burst arrival time of data packets of the first uplink service of the terminal device, that is, a sum of the first BAT and the TA value, to allocate appropriate uplink transmission resources to the terminal device. This reduces a latency of waiting for transmission resources by the uplink service data packets, and meets low-latency requirements.

In this embodiment of this application, the second information and the third information may be carried in different fields of a same packet, or may be carried in different packets. This is not limited in embodiments of this application.

In this embodiment of this application, the network device requests the terminal device to report the BAT of the first uplink service, and the terminal device reports the first BAT determined by using the downlink frame boundary as a reference to the network device and reports the TA value of the terminal device to the network device, so that the network device can be promptly aware of the burst arrival time of data packets of the first uplink service of the terminal device. This reduces the latency of waiting for transmission resources by the uplink service data packets, and meets the low-latency requirements.

In a possible implementation of any one of the first aspect to the third aspect, the network device includes a central unit CU and a distributed unit DU, and the method further includes:
the central unit CU receives the first BAT, and indicates the first BAT to the distributed unit DU; and
the DU determines a BAT offset based on the first BAT, and sends the BAT offset to the central unit, where the BAT offset indicates an adjustment amount that is of the BAT of the uplink service of the UE and that is expected by the distributed unit DU.

Optionally, the method further includes:
the central unit CU further indicates at least one of a service identifier, a service periodicity, and a BAT adaptation to the distributed unit DU, where the BAT adaptation indicates that the distributed unit DU may feed back the BAT offset to the central unit CU.

In a possible implementation of any one of the first aspect to the third aspect, the network device includes a central unit CU and a distributed unit DU, and the method further includes:
the distributed unit DU receives the first BAT, and determines a BAT offset based on the first BAT, where the BAT offset indicates an adjustment amount that is of the BAT of the uplink service of the UE and that is expected by the distributed unit DU; and
the distributed unit DU indicates the BAT offset to the central unit CU.

Optionally, the method further includes:
the distributed unit DU further indicates at least one of a service identifier and a service periodicity to the central unit CU.

In a possible implementation of any one of the first aspect to the third aspect, the first BAT is represented by at least one of the following: a system frame number, a slot index, and a symbol index.

In a possible implementation of the first aspect, the first information further indicates that the first BAT is determined based on the uplink frame boundary of the terminal device.

In a possible implementation of the second aspect, the first information further indicates that the first BAT is determined based on the downlink frame boundary and the timing advance TA value of the terminal device.

In a possible implementation of the third aspect, the first information further indicates that the first BAT is determined based on the downlink frame boundary of the terminal device.

In a possible implementation of any one of the first aspect to the third aspect, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

Optionally, the first information further includes information about a periodicity of the first uplink service.

In a possible implementation of any one of the first aspect to the third aspect, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In a possible implementation of any one of the first aspect to the third aspect, the first information further includes a first timer, and the first timer is used by the terminal device to report, when the BAT corresponding to the first uplink service changes and the first timer expires or does not run, the BAT corresponding to the first uplink service.

In a possible implementation of any one of the first aspect to the third aspect, the first information further includes a second timer, and the second timer is used by the terminal device to report, when the second timer expires, the BAT corresponding to the first uplink service.

In a possible implementation of any one of the first aspect to the third aspect, the first information further includes a first threshold, and the first threshold is used by the terminal device to report, when a deviation between an expected arrival time and an actual arrival time of a data packet of the first uplink service exceeds the first threshold, the BAT corresponding to the first uplink service.

In a possible implementation of any one of the first aspect to the third aspect, the first threshold is a time value or a time range.

In a possible implementation of any one of the first aspect to the third aspect, the expected arrival time of the data packet of the first uplink service is determined based on a periodicity of the first uplink service and a reported second BAT, and the second BAT is a BAT reported immediately before the first BAT.

In a possible implementation of any one of the first aspect to the third aspect, the first information further includes the periodicity of the first uplink service, or the periodicity of the first uplink service is preconfigured.

In a possible implementation of any one of the first aspect to the third aspect, the first information further includes a third timer, and the third timer is used by the terminal device to report, when the deviation between the expected arrival time and the actual arrival time of the data packet of the first uplink service exceeds the first threshold and the third timer expires or does not run, the BAT corresponding to the first uplink service.

In a possible implementation of any one of the first aspect to the third aspect, the first information further includes a second threshold, and the method further includes:
receiving first indication information from the terminal device, where the first indication information indicates that a deviation between an expected arrival time and an actual arrival time of a data packet of the first uplink service exceeds the second threshold;
sending a request message to the terminal device, where the request message is used to request the BAT corresponding to the first uplink service; and
receiving, from the terminal device, the BAT corresponding to the first uplink service.

In a possible implementation of any one of the first aspect to the third aspect, the second threshold is a time value or a time range.

In a possible implementation of any one of the first aspect to the third aspect, the expected arrival time of the data packet of the first uplink service is determined based on a periodicity of the first uplink service and a reported second BAT, and the second BAT is a BAT reported immediately before the first BAT.

In a possible implementation of any one of the first aspect to the third aspect, the first information further includes the periodicity of the first uplink service, or the periodicity of the first uplink service is preconfigured.

In a possible implementation of any one of the first aspect to the third aspect, the first information further includes a fourth timer, and the fourth timer is used by the terminal device to send the first indication information when the deviation between the expected arrival time and the actual arrival time of the data packet of the first uplink service exceeds the second threshold and the fourth timer expires or does not run.

In a possible implementation of any one of the first aspect to the third aspect, the method further includes:
receiving second indication information from the terminal device, where the second indication information indicates that the BAT of a data packet of the first uplink service changes;
sending a request message to the terminal device, where the request message is used to request the BAT corresponding to the first uplink service; and
receiving, from the terminal device, the BAT corresponding to the first uplink service.

In a possible implementation of any one of the first aspect to the third aspect, an expected arrival time of the data packet of the first uplink service is determined based on a periodicity of the first uplink service and a reported second BAT, and the second BAT is a BAT reported immediately before the first BAT.

In a possible implementation of any one of the first aspect to the third aspect, the first information further includes the periodicity of the first uplink service, or the periodicity of the first uplink service is preconfigured.

In a possible implementation of any one of the first aspect to the third aspect, the first information further includes a fifth timer, and the fifth timer is used by the terminal device to send the second indication information when the expected arrival time and an actual arrival time of the data packet of the first uplink service do not match and the fifth timer expires or does not run.

For technical effects brought by any one of the fourth aspect to the sixth aspect and the possible implementations, refer to the descriptions of the technical effects of any one of the first aspect to the third aspect and corresponding implementations.

According to a seventh aspect, an embodiment of this application provides a communication apparatus. The apparatus includes a module or a unit configured to perform the method according to any one of the first aspect to the third aspect.

In a possible design 1, the apparatus includes:
a communication unit, configured to receive first information from a network device, where the first information is used to request a first burst arrival time BAT corresponding to a first uplink service; and
the communication unit is further configured to send second information to the network device, where the second information includes information about the first BAT, and the first BAT is determined based on an uplink frame boundary of a terminal device.

In a possible design 2, the apparatus includes:
a communication unit, configured to receive first information from a network device, where the first information is used to request a first burst arrival time BAT corresponding to a first uplink service; and
the communication unit is further configured to send second information to the network device, where the second information includes information about the first BAT, and the first BAT is determined based on a downlink frame boundary and a timing advance TA value of a terminal device.

In a possible design 3, the apparatus includes:
a communication unit, configured to receive first information from a network device, where the first information is used to request a first burst arrival time BAT corresponding to a first uplink service;
the communication unit is further configured to send second information to the network device, where the second information includes information about the first BAT, and the first BAT is determined based on a downlink frame boundary of a terminal device; and
the communication unit is further configured to send third information to the network device, where the third information includes a TA value of the terminal device.

In a possible implementation of any one of the foregoing designs, the apparatus further includes:
a processing unit, configured to determine the first BAT.

In a possible implementation of any one of the foregoing designs, the first BAT is represented by at least one of the following: a system frame number, a slot index, and a symbol index.

In a possible implementation of the foregoing design 1, the first information further indicates that the first BAT is determined based on the uplink frame boundary of the terminal device.

In a possible implementation of the foregoing design 2, the first information further indicates that the first BAT is determined based on the downlink frame boundary and the timing advance TA value of the terminal device.

In a possible implementation of the foregoing design 3, the first information further indicates that the first BAT is determined based on the downlink frame boundary of the terminal device.

In a possible implementation of any one of the foregoing designs, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

In a possible implementation of any one of the foregoing designs, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In a possible implementation of any one of the foregoing designs, the first information further includes a first timer;
the processing unit is further configured to start the first timer when the second information is sent; and
the communication unit is further configured to: when the BAT corresponding to the first uplink service changes and the first timer expires or does not run, report the BAT corresponding to the first uplink service to the network device.

In a possible implementation of any one of the foregoing designs, the first information further includes a second timer;
the processing unit is further configured to start the second timer when the second information is sent; and
the communication unit is further configured to: when the second timer expires, report the BAT corresponding to the first uplink service to the network device.

In a possible implementation of any one of the foregoing designs, the first information further includes a first threshold; and
the communication unit is further configured to: when a deviation between an expected arrival time and an actual arrival time of a data packet of the first uplink service exceeds the first threshold, report the BAT corresponding to the first uplink service to the network device.

In a possible implementation of any one of the foregoing designs, the first threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a third timer;
the processing unit is further configured to start the third timer when the second information is sent; and
the communication unit is further configured to: when the deviation between the expected arrival time and the actual arrival time of the data packet of the first uplink service exceeds the first threshold and the third timer expires or does not run, report the BAT corresponding to the first uplink service to the network device.

In a possible implementation of any one of the foregoing designs, the first information further includes a second threshold;
the communication unit is further configured to: when a deviation between an expected arrival time and an actual arrival time of a data packet of the first uplink service exceeds the second threshold, send first indication information to the network device, where the first indication information indicates that the deviation between the expected arrival time and the actual arrival time of the data packet of the first uplink service exceeds the second threshold;
the communication unit is further configured to receive a request message from the network device, where the request message is used to request the BAT corresponding to the first uplink service; and
the communication unit is further configured to report the BAT corresponding to the first uplink service to the network device.

In a possible implementation of any one of the foregoing designs, the second threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fourth timer;
the processing unit is further configured to start the fourth timer when the first indication information is sent; and
the communication unit is further configured to: when the deviation between the expected arrival time and the actual arrival time of the data packet of the first uplink service exceeds the second threshold and the fourth timer expires or does not run, send the first indication information to the network device.

In a possible implementation of any one of the foregoing designs, the communication unit is further configured to: when an expected arrival time and an actual arrival time of a data packet of the first uplink service do not match, send second indication information to the network device, where the second indication information indicates that the BAT of the data packet of the first uplink service changes;
the communication unit is further configured to receive a request message from the network device, where the request message is used to request the BAT corresponding to the first uplink service; and
the communication unit is further configured to report the BAT corresponding to the first uplink service to the network device.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fifth timer;
the processing unit is further configured to start the fifth timer when the second indication information is sent; and
the communication unit is further configured to: when the expected arrival time and the actual arrival time of the data packet of the first uplink service do not match and the fifth timer expires or does not run, send the second indication information to the network device.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used for the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

For technical effects brought by any one of the seventh aspect and the possible implementations, refer to the descriptions of the technical effects of any one of the first aspect to the third aspect and corresponding implementations.

According to an eighth aspect, an embodiment of this application provides a communication apparatus. The apparatus includes a module or a unit configured to perform the method according to any one of the fourth aspect to the sixth aspect.

In a possible design 1, the apparatus includes:
a communication unit, configured to send first information to a terminal device, where the first information is used to request a first burst arrival time BAT corresponding to a first uplink service; and
the communication unit is further configured to receive second information from the terminal device, where the second information includes information about the first BAT, and the first BAT is determined based on an uplink frame boundary of the terminal device.

In a possible design 2, the apparatus includes:
a communication unit, configured to send first information to a terminal device, where the first information is used to request a first burst arrival time BAT corresponding to a first uplink service; and
the communication unit is further configured to receive second information from the terminal device, where the second information includes information about the first BAT, and the first BAT is determined based on a downlink frame boundary and a timing advance TA value of the terminal device.

In a possible design 3, the apparatus includes:
a communication unit, configured to send first information to a terminal device, where the first information is used to request a first burst arrival time BAT corresponding to a first uplink service;
the communication unit is further configured to receive second information from the terminal device, where the second information includes information about the first BAT, and the first BAT is determined based on a downlink frame boundary of the terminal device; and
the communication unit is further configured to receive third information from the terminal device, where the third information includes a TA value of the terminal device.

In a possible implementation of any one of the foregoing designs, the apparatus further includes:
a processing unit, configured to determine the first information.

In a possible implementation of any one of the foregoing designs, the first BAT is represented by at least one of the following: a system frame number, a slot index, and a symbol index.

In a possible implementation of the foregoing design 1, the first information further indicates that the first BAT is determined based on the uplink frame boundary of the terminal device.

In a possible implementation of the foregoing design 2, the first information further indicates that the first BAT is determined based on the downlink frame boundary and the timing advance TA value of the terminal device.

In a possible implementation of the foregoing design 3, the first information further indicates that the first BAT is determined based on the downlink frame boundary of the terminal device.

In a possible implementation of any one of the foregoing designs, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

In a possible implementation of any one of the foregoing designs, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In a possible implementation of any one of the foregoing designs, the first information further includes a first timer, and the first timer is used by the terminal device to report, when the BAT corresponding to the first uplink service changes and the first timer expires or does not run, the BAT corresponding to the first uplink service.

In a possible implementation of any one of the foregoing designs, the first information further includes a second timer, and the second timer is used by the terminal device to report, when the second timer expires, the BAT corresponding to the first uplink service.

In a possible implementation of any one of the foregoing designs, the first information further includes a first threshold, and the first threshold is used by the terminal device to report, when a deviation between an expected arrival time and an actual arrival time of a data packet of the first uplink service exceeds the first threshold, the BAT corresponding to the first uplink service.

In a possible implementation of any one of the foregoing designs, the first threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a third timer, and the third timer is used by the terminal device to report, when the deviation between the expected arrival time and the actual arrival time of the data packet of the first uplink service exceeds the first threshold and the third timer expires or does not run, the BAT corresponding to the first uplink service.

In a possible implementation of any one of the foregoing designs, the first information further includes a second threshold;
the communication unit is further configured to receive first indication information from the terminal device, where the first indication information indicates that a deviation between an expected arrival time and an actual arrival time of a data packet of the first uplink service exceeds the second threshold;
the communication unit is further configured to send a request message to the terminal device, where the request message is used to request the BAT corresponding to the first uplink service; and
the communication unit is further configured to receive, from the terminal device, the BAT corresponding to the first uplink service.

In a possible implementation of any one of the foregoing designs, the second threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fourth timer, and the fourth timer is used by the terminal device to send the first indication information when the deviation between the expected arrival time and the actual arrival time of the data packet of the first uplink service exceeds the second threshold and the fourth timer expires or does not run.

In a possible implementation of any one of the foregoing designs, the communication unit is further configured to receive second indication information from the terminal device, where the second indication information indicates that the BAT of a data packet of the first uplink service changes;
the communication unit is further configured to send a request message to the terminal device, where the request message is used to request the BAT corresponding to the first uplink service; and
the communication unit is further configured to receive, from the terminal device, the BAT corresponding to the first uplink service.

In a possible implementation of any one of the foregoing designs, an expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fifth timer, and the fifth timer is used by the terminal device to send the second indication information when the expected arrival time and an actual arrival time of the data packet of the first uplink service do not match and the fifth timer expires or does not run.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used for the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

For technical effects brought by any one of the eighth aspect and the possible implementations, refer to the descriptions of the technical effects of any one of the fourth aspect to the sixth aspect and corresponding implementations.

According to a ninth aspect, an embodiment of this application provides a communication apparatus. The communication apparatus includes a processor. The processor is coupled to a memory, and may be configured to execute instructions in the memory to perform the method according to any one of the first aspect to the sixth aspect and the possible implementations. Optionally, the communication apparatus further includes the memory. Optionally, the communication apparatus further includes a communication interface, and the processor is coupled to the communication interface.

According to a tenth aspect, an embodiment of this application provides a communication apparatus, including a logic circuit and a communication interface. The communication interface is configured to receive information or send information. The logic circuit is configured to receive information or send information through the communication interface, so that the communication apparatus performs the method according to any one of the first aspect to the sixth aspect and the possible implementations.

According to an eleventh aspect, an embodiment of this application provides a computer-readable storage medium. The computer-readable storage medium is configured to store a computer program (which may also be referred to as code or instructions). When the computer program is run on a computer, the method according to any one of the first aspect to the sixth aspect and the possible implementations is implemented.

According to a twelfth aspect, an embodiment of this application provides a computer program product. The computer program product includes a computer program (which may also be referred to as code or instructions). When the computer program is run, a computer is enabled to perform the method according to any one of the first aspect to the sixth aspect and the possible implementations.

According to a thirteenth aspect, an embodiment of this application provides a chip. The chip includes a processor. The processor is configured to execute instructions. When the processor executes the instructions, the chip is enabled to perform the method according to any one of the first aspect to the sixth aspect and the possible implementations. Optionally, the chip further includes a communication interface, and the communication interface is configured to receive a signal or send a signal.

According to a fourteenth aspect, an embodiment of this application provides a communication system. The communication system includes at least one of the following: the communication apparatus according to the seventh aspect, the communication apparatus according to the eighth aspect, the communication apparatus according to the ninth aspect, the communication apparatus according to the tenth aspect, or the chip according to the thirteenth aspect.

According to a fifteenth aspect, an embodiment of this application provides a communication system. The communication system includes a network device and a terminal device. The terminal device is configured to perform the method according to any one of the first aspect to the third aspect and the possible implementations, and the network device is configured to perform the method according to any one of the fourth aspect to the sixth aspect and the possible implementations.

In addition, in a process of performing the method according to any one of the first aspect to the sixth aspect and the possible implementations, a process related to sending information and/or receiving information or the like in the method can be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information, and then processed information arrives at the transceiver. Similarly, when the processor receives the input information, the transceiver (or the communication interface or the sending module) receives the information, and inputs the information into the processor. Further, after the transceiver receives the information, other processing may need to be performed on the information, and then processed information is input into the processor.

According to the foregoing principle, for example, sending information mentioned in the foregoing method can be understood as outputting information by the processor. For another example, receiving information can be understood as receiving input information by the processor.

Optionally, transmitting, sending, receiving, and other operations related to the processor can be more generally understood as outputting, receiving, inputting, and other operations performed by the processor, unless otherwise specified or the operations contradict actual functions or internal logic of the operations in related descriptions.

Optionally, in a process of performing the method according to any one of the first aspect to the sixth aspect and the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (Read-Only Memory, ROM). The memory and the processor may be integrated on a same chip, or may be disposed on different chips. A type of the memory and a manner in which the memory and the processor are disposed are not limited in embodiments of this application.

In a possible implementation, the at least one memory is located outside an apparatus.

In another possible implementation, the at least one memory is located in an apparatus.

In still another possible implementation, some of the at least one memory are located in an apparatus, and the other memories are located outside the apparatus.

In this application, the processor and the memory may be alternatively integrated into one device. In other words, the processor and the memory may be alternatively integrated together.

In embodiments of this application, the first BAT determined by using the uplink frame boundary of the terminal device as a reference is reported to the network device, so that the network device can be promptly aware of the burst arrival time of data packets of the first uplink service of the terminal device. This reduces the latency of waiting for transmission resources by the uplink service data packets, and meets the low-latency requirements.

### BRIEF DESCRIPTION OF DRAWINGS

To describe technical solutions in embodiments of this application more clearly, the following briefly describes accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of a communication system according to an embodiment of this application;
FIG. 2A is a schematic flowchart of determining a BAT offset according to an embodiment of this application;
FIG. 2B is a schematic flowchart of determining a BAT offset according to an embodiment of this application;
FIG. 2C is a schematic flowchart of determining a BAT offset according to an embodiment of this application;
FIG. 3 is a diagram of a BAT change according to an embodiment of this application;
FIG. 4 is a schematic flowchart of a communication method according to an embodiment of this application;
FIG. 5A is a diagram of an arrival moment of an uplink service data packet according to an embodiment of this application;
FIG. 5B is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a condition for triggering BAT reporting according to an embodiment of this application;
FIG. 9 is a schematic flowchart of a communication method according to an embodiment of this application;
FIG. 10 is a schematic flowchart of a communication method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

In the specification, claims, and accompanying drawings of this application, terms "first", "second", and the like are intended to distinguish between different objects but do not indicate a particular order. In addition, terms "include", "have", and any other variations thereof are intended to cover non-exclusive inclusion. For example, a process, method, system, product, device, or the like that includes a series of steps or units is not limited to the listed steps or units, but optionally further includes unlisted steps, units, or the like, or optionally further includes other steps or units inherent to the process, method, product, device, or the like.

An "embodiment" mentioned in this specification means that a particular feature, structure, or characteristic described with reference to embodiment may be included in at least one embodiment of this application. The phrase shown at various locations in this specification may not necessarily refer to a same embodiment, and is not an independent or optional embodiment exclusive from other embodiments. A person skilled in the art can explicitly and implicitly understand that in embodiments of this application, unless otherwise specified or there is a logical conflict, terms and/or descriptions in embodiments are consistent and may be mutually referenced, and technical features in different embodiments may be combined into a new embodiment based on an inner logical relationship between the technical features.

It should be understood that in this application, "at least one item (piece)" means one or more, "a plurality of" means two or more, "at least two items (pieces)" means two, three, or more, and "and/or" describes an association relationship for describing associated objects and indicates that three relationships may exist. For example, "A and/or B" may indicate the following three cases: Only A exists, only B exists, and both A and B exist. A and B each may be in a singular or plural form. A character "/" generally indicates an "or" relationship between associated objects. "At least one of the following items (pieces)" or a similar expression thereof means any combination of these items, including a singular item (piece) or any combination of plural items (pieces). For example, at least one item (piece) of a, b, or c may represent a; b; c; a and b; a and c; b and c; or a, b, and c, where a, b, and c each may be in a singular or plural form.

It should be noted that in this application, "indications" may include a direct indication, an indirect indication, an explicit indication, and an implicit indication. That a piece of indication information is used to indicate A can be understood as follows: The indication information carries A, directly indicates A, or indirectly indicates A.

In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed. For example, alternatively, specific information may be indicated by using a sorting order of a variety of information pre-agreed (for example, specified in a protocol), to reduce indication overheads to some extent. The to-be-indicated information may be sent as a whole, or may be separately sent in a form of a plurality of pieces of sub-information. Sending periodicities and/or sending occasions of these pieces of sub-information may be identical or different. A specific sending method is not limited in this application. The sending periodicities and/or the sending occasions of these pieces of sub-information may be predefined, for example, predefined according to a protocol; or may be configured by sending configuration information by a transmit-end device to a receive-end device.

It should be noted that in this application, "sending" can be understood as "outputting", and "receiving" can be understood as "inputting". In "sending information to A", "to A" indicates only a direction of information transmission, A is a destination, and "sending information to A" is not restricted to direct sending over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

Methods provided in this application can be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) that emerges in future communication development.

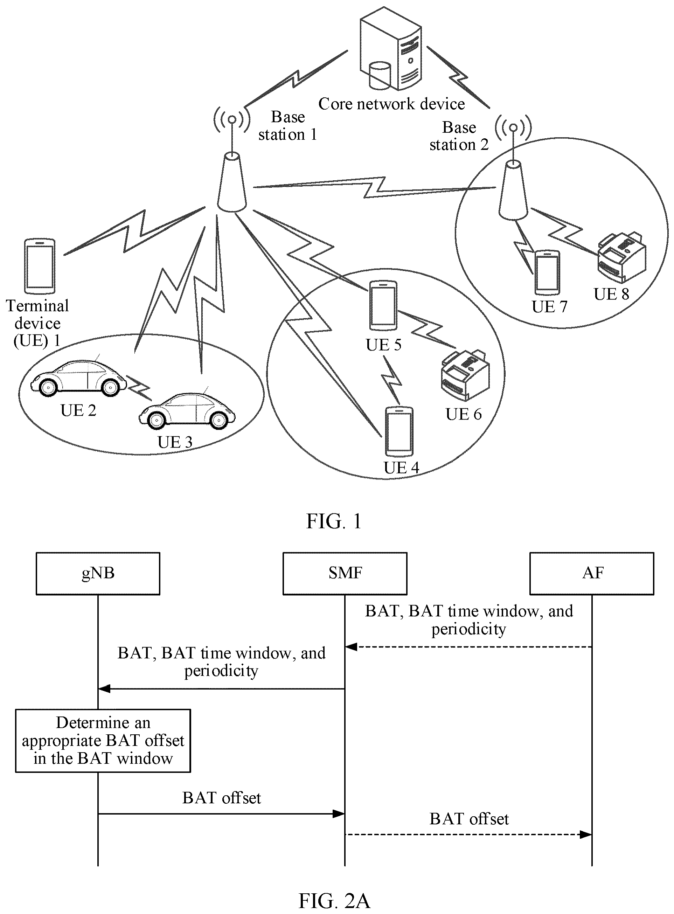

The technical solutions provided in this application can also be applied to machine type communication (machine type communication, MTC), long term evolution-machine type communication (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-everything (vehicle-to-everything, V2X, where X can stand for anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. For example, in FIG. 1 shown below, terminal devices may communicate with each other by using the D2D technology, the M2M technology, the V2X technology, or the like.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next generation NodeB (next generation NodeB, gNB), a next generation evolved NodeB (next generation evolved NodeB, ng-eNB), an access network device in future 6G communication, or the like. The access network device may be any device with wireless receiving and sending functions, and includes but is not limited to the base station described above. The base station may be alternatively a base station in a future communication system like a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may be a small cell, a transmission reception point (transmission reception point, TRP) (or may be referred to as a transmission point), or the like. It can be understood that the access network device may be alternatively a base station or the like in a future evolved public land mobile network (public land mobile network, PLMN).

In some deployments, the base station (for example, the gNB) may include a central unit (central unit, CU) and a distributed unit (distributed unit, DU). To be specific, functions of the base station in an access network are divided, some functions of the base station are deployed on a CU, and remaining functions are deployed on a DU. In addition, a plurality of DUs share one CU. This can reduce costs and facilitates network expansion. In some other deployments of the base station, the CU may be further divided into a CU-control plane (control plane, CP), a CU-user plane (user plane, UP), and the like. In still some other deployments of the base station, the base station may be alternatively a radio unit (radio unit, RU) or the like. In still some other deployments of the base station, the base station may be alternatively of an open radio access network (open radio access network, ORAN) architecture or the like. A specific type of the base station is not limited in this application. For example, when the base station is of the ORAN architecture, the base station shown in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

For ease of description, the following describes the methods in this application by using an example in which the access network device is a base station.

For example, the terminal device may also be referred to as a user equipment (user equipment, UE), a terminal, or the like. The terminal device is a device with wireless receiving and sending functions, and may be deployed on land, including an indoor device or an outdoor device, a handheld device, a wearable device, or a vehicle-mounted device; may be deployed on water, for example, on a ship; or may be deployed in air, for example, on an airplane, a balloon, or a satellite. The terminal device may be a mobile phone (mobile phone), a tablet computer (Pad), a computer with wireless receiving and sending functions, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. It can be understood that the terminal device may be alternatively a terminal device in a future 6G network, a terminal device in a future evolved PLMN, or the like.

It can be understood that the terminal device described in this application may include a vehicle (for example, an entire vehicle) in an internet of vehicles, and may also include a vehicle-mounted device, a vehicle-mounted terminal, or the like in the internet of vehicles. A specific form of the terminal device used in the internet of vehicles is not limited in this application.

For ease of description, the following describes the methods in this application by using an example in which the terminal device is a UE.

As shown in FIG. 1, the communication system may further include at least one core network device. The core network device is described as follows.

For example, the core network device includes user access control, mobility management, session management, user security authentication, charging, and other services. The core network device includes a plurality of functional units, and may be divided into a control plane functional entity and a data plane functional entity. An access and mobility management function (access and mobility management function, AMF) is responsible for user access management, security authentication, and mobility management. A location management function (location management function, LMF) unit is responsible for managing and controlling a location service request of a target terminal, and processing location-related information. A user plane function (user plane function, UPF) unit is responsible for managing user plane data transmission, traffic statistics collection, and the like.

The communication system shown in FIG. 1 includes one core network device, two base stations, and eight UEs, for example, a core network device, a base station 1, a base station 2, and a UE 1 to a UE 8 that are shown in FIG. 1. In the communication system, the base station 1 may send a downlink signal like configuration information or downlink control information (downlink control information, DCI) to the UE 1 to the UE 6, and the UE 1 to the UE 6 may send an uplink signal like an SRS or a physical uplink shared channel (physical uplink shared channel, PUSCH) to the base station 1. The base station 1 may further send a downlink signal to the UE 7 and the UE 8 via the base station 2, and the UE 7 and the UE 8 may send an uplink signal to the base station 1 via the base station 2. The base station 2 may send a downlink signal like configuration information or DCI to the UE 7 and the UE 8, and the UE 7 and the UE 8 may send an uplink signal like an SRS or a PUSCH to the base station 2. It can be understood that, for a communication mode between UEs, refer to the foregoing descriptions. Details are not described herein again.

It should be understood that FIG. 1 shows an example of one core network device, two base stations, eight UEs, and communication links between communication devices. Optionally, the communication system may include a plurality of base stations, and another quantity of UEs, for example, more or fewer UEs, may be included in a coverage area of each base station. This is not limited in this application.

A plurality of antennas may be configured for the foregoing communication devices, for example, the core network device, the base station 1, the base station 2, and the UE 1 to the UE 8 in FIG. 1. The plurality of antennas may include at least one transmit antenna for sending a signal, at least one receive antenna for receiving a signal, and the like. A specific structure of each communication device is not limited in embodiments of this application. Optionally, the communication system may further include other network entities, for example, a network controller and a mobility management entity. This is not limited in embodiments of this application.

It can be understood that the diagram of the communication system shown in FIG. 1 is merely an example. For a diagram of a communication system in another form, refer to a related standard, protocol, or the like. Details are not described herein.

Embodiments shown below are applicable to the communication system shown in FIG. 1, or are applicable to a communication system in another form. This is not described below again.

This application provides a communication method, applied to the field of communication technologies, for example, ultra-reliable low-latency communication (ultra-reliable low-latency communication, URLLC). To describe the solutions of this application more clearly, the following first describes some knowledge related to a URLLC service.

URLLC, namely, ultra-reliable low-latency communication, is one of the three application scenarios of 5G, and has high reliability, a low latency, extremely high availability, and other new features. It is widely recognized in the industry that 5G URLLC can be applied to scenarios such as industrial control, factory automation, smart grids, smart devices, internet of vehicles communication, and remote surgery.

A URLLC service has a quality-of-service (quality-of-service, QoS) requirement on high reliability and a low latency. For example, a data transmission latency of the URLLC service needs to meet a packet delay budget (packet delay budget, PDB) requirement within 2 ms. For a base station, if URLLC service data packets of most user equipments (user equipments, UEs) served by the base station all arrive at an air interface side of the base station in a short time, it is difficult for a scheduler of the base station to allocate appropriate transmission resources for these data packets to successfully transmit all these data packets within a needed PDB.

At present, times at which URLLC service data packets are generated may be adjusted, so that times at which data packets of different UEs arrive at an air interface side of a base station are staggered. In this way, a scheduler of the base station can better allocate transmission resources for these data packets, to meet low-latency requirements of more UEs.

For details, refer to FIG. 2A. FIG. 2A is a schematic flowchart of determining a BAT offset according to an embodiment of this application.

As shown in FIG. 2A, before a URLLC service flow of a UE starts to be transmitted, an application server (application function, AF) indicates, to a core network element, namely, a session management function (session management function, SMF), information about a time at which a URLLC service arrives at a 5G system (5G system, 5GS). The time information includes but is not limited to information such as a BAT, a BAT time window (BAT window), and a periodicity. After converting the time information into a 5GS time, the SMF may further indicate the 5GS time to a base station. The BAT indicated by the SMF to the base station indicates a time at which the URLLC service arrives at a radio access network (radio access network, RAN) side. The base station (gNB) determines, based on the foregoing information corresponding to URLLC services of UEs, whether a BAT of a URLLC service of a UE is appropriate. If the BAT is inappropriate, an appropriate BAT offset (BAT offset) is determined in the BAT window, and is fed back to the AF through the SMF. Further, the AF may make a URLLC application correspondingly adjust times at which URLLC services are generated, so that times at which URLLC service data packets of different UEs arrive at an air interface side of the base station can be staggered. In this way, a scheduler of the base station can better allocate transmission resources for these data packets, to meet low-latency requirements of more UEs.

It should be understood that the foregoing manner of determining the BAT offset to adjust, by the URLLC application, the times at which the data packets are generated is applicable to both an uplink service and a downlink service.

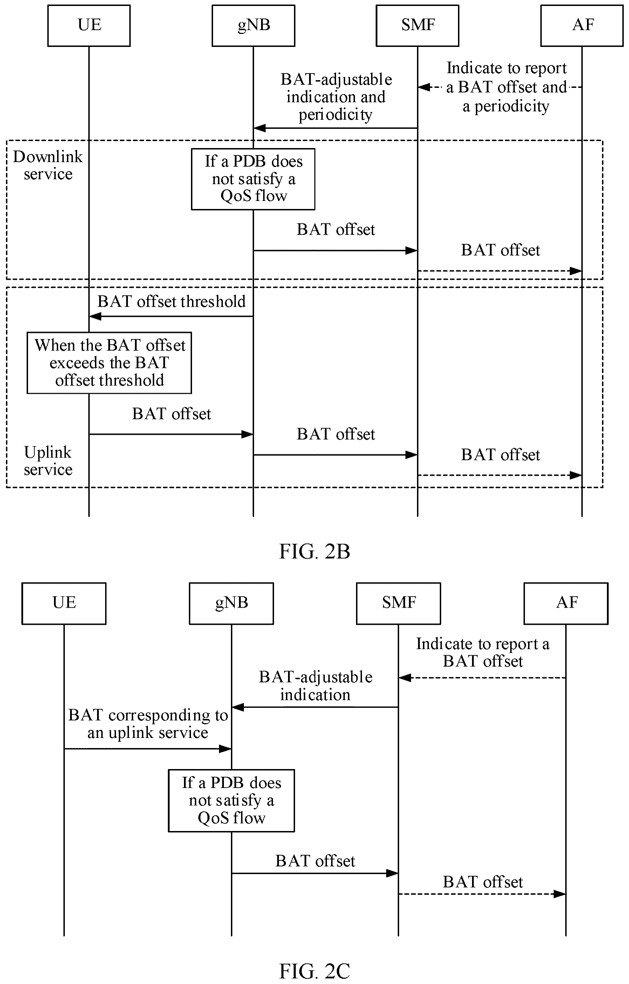

FIG. 2B is a schematic flowchart of determining a BAT offset according to an embodiment of this application.

As shown in FIG. 2B, an AF indicates a periodicity of a URLLC service of a UE and a BAT-adjustable indication to a base station through an SMF. After the URLLC service of the UE starts to be transmitted, if a RAN side finds that air interface scheduling cannot meet a low-latency requirement of the URLLC service, the RAN side may calculate an appropriate BAT offset (BAT offset), and feed back the BAT offset to the AF through the SMF. Further, the AF may make a URLLC application correspondingly adjust times at which URLLC services are generated, so that times at which URLLC service data packets of different UEs arrive at an air interface side of the base station can be staggered. In this way, a scheduler of the base station can better allocate transmission resources for these data packets, to meet low-latency requirements of more UEs.

Particularly, for an uplink service, the RAN side determines the BAT offset in the following manner:
After receiving the "BAT-adjustable" indication from the SMF, the RAN sends the indication and a BAT offset threshold to the UE by using radio resource control (radio resource control, RRC) signaling. The UE determines the BAT offset value based on a time difference between a time at which the URLLC uplink service actually arrives at the air interface side and an uplink grant. If the BAT offset exceeds the configured BAT offset threshold, the UE reports the BAT offset to the RAN. Further, the RAN reports the BAT offset to the AF through the SMF, and the AF may make the URLLC application correspondingly adjust times at which URLLC services are generated, so that times at which URLLC service data packets of different UEs arrive at the air interface side of the base station can be staggered. In this way, the scheduler of the base station can better allocate transmission resources for these data packets, to meet low-latency requirements of more UEs.

In this manner, the UE determines the BAT offset based on the actual BAT of the uplink service and the uplink transmission resource. However, actually, how the base station schedules a resource is implemented by the base station and is usually quite flexible. The UE may not be able to obtain a stable BAT offset. The UE reports an unstable BAT offset. As a result, the application continuously adjusts the BAT, and the base station continuously adjusts transmission resource allocation. Finally, a low-latency requirement of the service cannot be met. In addition, in this manner, UEs report respective BAT offsets in a distributed manner, and do not coordinate with each other. Consequently, after the application performs adjustment based on the BAT offsets reported by the UEs, it is possible that uplink services of the UEs still cannot be staggered in terms of time.

FIG. 2C is a schematic flowchart of determining a BAT offset according to an embodiment of this application.

As shown in FIG. 2C, a UE reports an actual BAT of an uplink service to a base station, a RAN side calculates an appropriate BAT offset of a URLLC uplink service of the UE based on an air interface resource and the actual BAT reported by the UE, and the RAN reports the BAT offset to an AF through an SMF. In this manner, the base station determines BAT offsets of UEs together, to ensure that after applications perform adjustment based on the corresponding BAT offsets, uplink services of the UEs can be staggered in terms of time. Further, the AF may make a URLLC application correspondingly adjust times at which URLLC services are generated, so that times at which URLLC service data packets of different UEs arrive at an air interface side of the base station can be staggered. In this way, a scheduler of the base station can better allocate transmission resources for these data packets, to meet low-latency requirements of more UEs.

Because a clock used by the URLLC application to correspondingly adjust the times at which the URLLC services are generated is not synchronized with a clock used by a 5GS, from a perspective of the 5GS, an arrival periodicity of an application data packet is not strictly fixed.

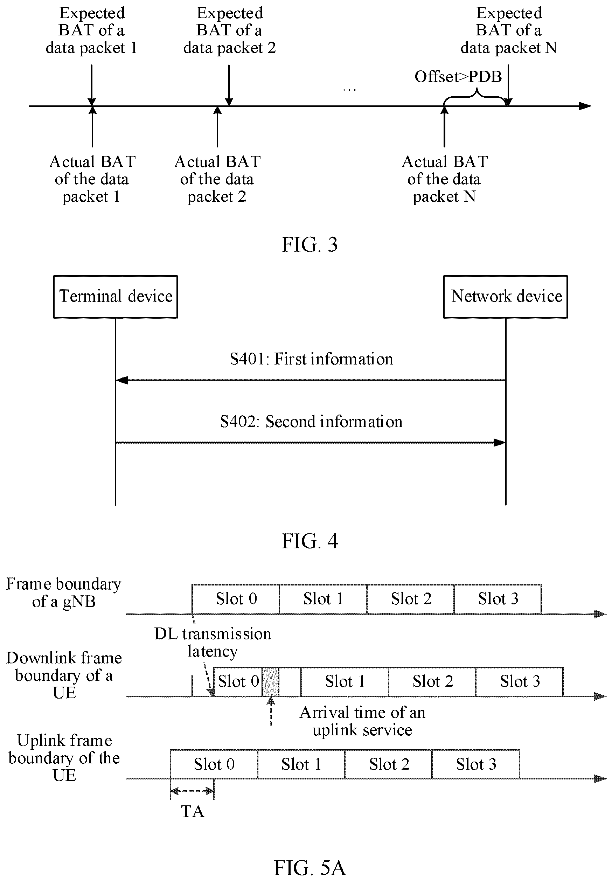

For details, refer to FIG. 3. FIG. 3 is a diagram of a BAT change according to an embodiment of this application.

As shown in FIG. 3, there is a slight deviation between a service periodicity considered by the 5GS and an actual service periodicity. As time goes on, the deviation may exceed a PDB requirement.

If an actual BAT of an uplink service of the UE changes obviously, but the base station cannot be promptly aware of the change, the base station may schedule inappropriate uplink transmission resources for the UE. Consequently, a latency of waiting for transmission resources by uplink service data packets is excessively long, and low-latency requirements of the service cannot be met.

To resolve the technical problem that the low-latency requirement of the uplink service cannot be met, an embodiment of this application provides a communication method, so that a base station can be promptly aware of a BAT change of uplink service data packets of UEs. This reduces a latency of waiting for transmission resources by the uplink service data packets, and meets low-latency requirements.

FIG. 4 is a schematic flowchart of a communication method according to an embodiment of this application. The communication method is applied to the field of communication technologies, for example, URLLC service communication. The communication method includes but is not limited to the following steps:
S401: A network device sends first information to a terminal device. Correspondingly, the terminal device receives the first information from the network device.
S402: The terminal device sends second information to the network device. Correspondingly, the network device receives the second information from the terminal device.

It can be understood that the terminal device in this embodiment of this application is a device equipped with a processor/chip that may be configured to execute computer executable instructions, or may be a processor/chip that may be configured to execute computer executable instructions. This is not limited in embodiments of this application. Optionally, the terminal device may be a handheld terminal (for example, a mobile phone or a tablet computer), may be a vehicle-mounted terminal (for example, a wireless terminal in self-driving), or the like. Specifically, the terminal device may be the terminal device (including but not limited to any one of the UE 1 to the UE 8) in FIG. 1, and is configured to perform the communication method in this embodiment of this application, to reduce a latency of waiting for transmission resources by uplink service data packets, and meet low-latency requirements.

It can be understood that the network device in this embodiment of this application is a device equipped with a processor/chip that may be configured to execute computer executable instructions, or may be a processor/chip that may be configured to execute computer executable instructions. This is not limited in embodiments of this application. Optionally, the network device may be an access network device, for example, a base station or a transmission point TRP. Specifically, the network device may be the access network device (including but not limited to either the base station 1 or the base station 2) in FIG. 1, and is configured to participate in performing the communication method in this embodiment of this application, to reduce a latency of waiting for transmission resources by uplink service data packets, and meet low-latency requirements.

The first information is used to request a first BAT corresponding to a first uplink service, the second information includes information about the first BAT, and the first BAT may be determined in any one of the following manners.

Manner 1: The first BAT is determined based on an uplink frame boundary of the terminal device.

As a frame boundary of the gNB is not aligned with a downlink frame boundary of the UE, a downlink transmission latency deviation exists between the frame boundary of the gNB and the downlink frame boundary of the UE. Additionally, the uplink frame boundary and the downlink frame boundary of the UE are also not aligned with each other, and the uplink frame boundary is ahead of the downlink frame boundary by a TA value. However, the network device may not be able to track an accurate TA value of the terminal device.

For details, refer to FIG. 5A. FIG. 5A is a diagram of an arrival moment of an uplink service data packet according to an embodiment of this application.

As shown in FIG. 5A, if a downlink frame boundary of a UE is used as a reference, an arrival time of an uplink service data packet of the UE is located in a downlink frame slot 0. Because an uplink frame boundary of the UE is ahead of the downlink frame boundary by a TA value, and the uplink service data packet of the UE is carried in an uplink frame, with the uplink frame boundary of the UE as a reference, an actual arrival time of an uplink service of the UE is located in an uplink frame slot 1. In this embodiment of this application, a BAT reported by the UE may be represented by a slot 1.

Therefore, the first BAT determined by using the uplink frame boundary of the terminal device as a reference is reported to the network device, so that the network device can be promptly aware of the burst arrival time of data packets of the first uplink service of the terminal device even if the network device does not know the accurate TA value, to allocate appropriate uplink transmission resources to the terminal device. This reduces a latency of waiting for transmission resources by the uplink service data packets, and meets low-latency requirements.

In this embodiment of this application, the network device may request the terminal device to report the BAT of the first uplink service, and the terminal device reports the first BAT determined by using the uplink frame boundary as a reference to the network device, so that the network device can be promptly aware of the burst arrival time of data packets of the first uplink service of the terminal device. This reduces the latency of waiting for transmission resources by the uplink service data packets, and meets the low-latency requirements.

Manner 2: The first BAT is determined based on a downlink frame boundary and a timing advance TA value of the terminal device.

As a frame boundary of the network device is not aligned with the downlink frame boundary of the terminal device, a downlink transmission latency deviation exists between the frame boundary of the network device and the downlink frame boundary of the terminal device. Additionally, an uplink frame boundary and the downlink frame boundary of the terminal device are also not aligned with each other, and the uplink frame boundary is ahead of the downlink frame boundary by a TA value. However, the network device may not be able to track an accurate TA value of the terminal device. If the first BAT is determined by using the downlink frame boundary, the network device cannot determine a location at which an uplink transmission resource should be allocated to the terminal device.

For details, refer to FIG. 5A. A description of FIG. 5A is consistent with that of the foregoing manner 1. Details are not described herein again.

Therefore, the first BAT determined by using the downlink frame boundary and the TA value of the terminal device as a reference is reported to the network device. In other words, the first BAT in this case is a sum of an actual arrival time of an uplink service data packet and the TA value. The network device can be promptly aware of the burst arrival time of data packets of the first uplink service of the terminal device, to allocate appropriate uplink transmission resources to the terminal device. This reduces a latency of waiting for transmission resources by the uplink service data packets, and meets low-latency requirements.

In this embodiment of this application, the network device may request the terminal device to report the BAT of the first uplink service, and the terminal device reports the first BAT determined by using the downlink frame boundary and the TA value as a reference to the network device, so that the network device can be promptly aware of the burst arrival time of data packets of the first uplink service of the terminal device. This reduces the latency of waiting for transmission resources by the uplink service data packets, and meets the low-latency requirements.

Manner 3: The first BAT is determined based on a downlink frame boundary of the terminal device.

As a frame boundary of the network device is not aligned with the downlink frame boundary of the terminal device, a downlink transmission latency deviation exists between the frame boundary of the network device and the downlink frame boundary of the terminal device. Additionally, an uplink frame boundary and the downlink frame boundary of the terminal device are not aligned with each other, and the uplink frame boundary is ahead of the downlink frame boundary by a TA value. However, the network device may not be able to track an accurate TA value of the terminal device. If the first BAT is determined by using the downlink frame boundary, the network device cannot determine a location at which an uplink transmission resource should be allocated to the terminal device.

For details, refer to FIG. 5A. A description of FIG. 5A is consistent with that of the foregoing manner 1. Details are not described herein again.

Therefore, the first BAT determined by using the downlink frame boundary of the terminal device as a reference is reported to the network device, and optionally the TA value of the terminal device is reported to the network device. The network device can be promptly aware of an arrival time of data packets of the first uplink service of the terminal device, that is, a sum of the first BAT and the TA value, to allocate appropriate uplink transmission resources to the terminal device. This reduces a latency of waiting for transmission resources by the uplink service data packets, and meets low-latency requirements. When the network device can track the TA value of the terminal device, the TA value of the terminal device does not need to be reported to the network device.

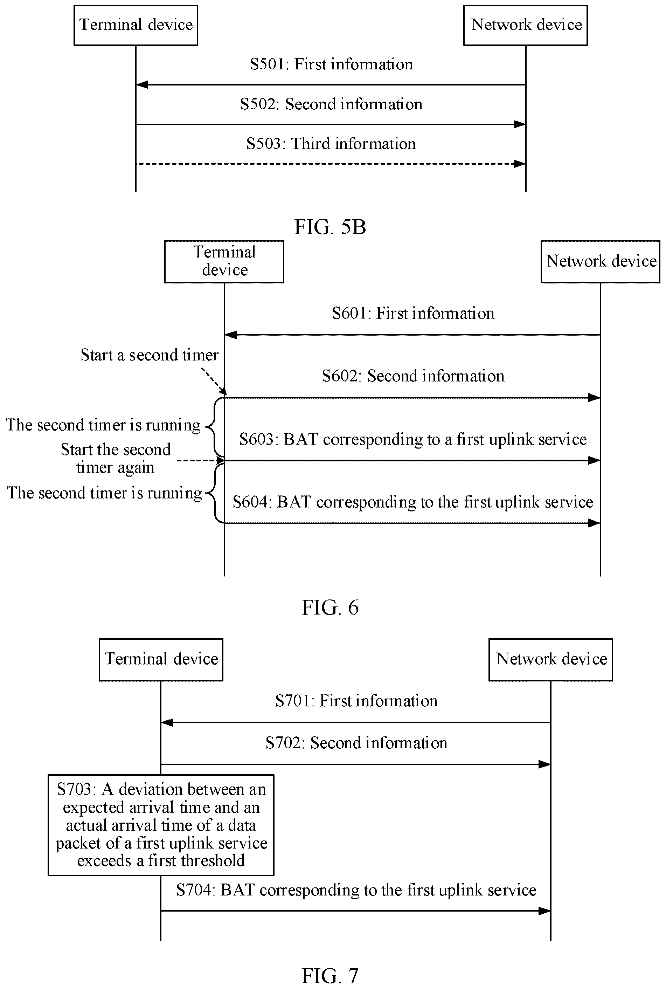

For details, refer to FIG. 5B. FIG. 5B is a schematic flowchart of a communication method according to an embodiment of this application. The communication method includes but is not limited to the following steps:
S501: A network device sends first information to a terminal device. Correspondingly, the terminal device receives the first information from the network device.
S502: The terminal device sends second information to the network device. Correspondingly, the network device receives the second information from the terminal device.
S503: Optionally, the terminal device sends third information to the network device. Correspondingly, the network device receives the third information from the terminal device.

It can be understood that the first information in FIG. 5B is consistent with the first information in FIG. 4, and is used to request a first BAT corresponding to a first uplink service. The second information in FIG. 5B includes information about the first BAT, and the first BAT is determined in the foregoing manner 3, that is, determined based on a downlink frame boundary of the terminal device. The third information in FIG. 5B includes a TA value of the terminal device.

It can be understood that, when the network device cannot track the TA value of the terminal device, step S503 may be performed. The network device obtains the TA value of the terminal device by receiving the third information, so that the network device can be promptly aware of an arrival time (that is, a sum of the first BAT and the TA value) of data packets of the first uplink service of the terminal device. When the network device can track the TA value of the terminal device, the TA value of the terminal device does not need to be reported to the network device. In other words, step S503 may not be performed (S503 is an optional step).

Optionally, the second information and the third information may be carried in different fields of a same packet, or may be carried in different packets. This is not limited in embodiments of this application.

For example, the second information is carried in an RRC message 1, and the third information is carried in an RRC message 2. To be specific, the UE reports the second information (UL BAT) by using the RRC message 1, and after receiving a request message that is sent by the base station and that is for requesting to report a TA, the UE reports the third information (TA value) by using the RRC message 2.

In this embodiment of this application, the network device may request the terminal device to report the BAT of the first uplink service, and the terminal device reports the first BAT determined by using the downlink frame boundary as a reference to the network device and reports the TA value of the terminal device to the network device, so that the network device can be promptly aware of the burst arrival time of data packets of the first uplink service of the terminal device. This reduces a latency of waiting for transmission resources by the uplink service data packets, and meets low-latency requirements.

In a possible embodiment, the first BAT may be represented by a system frame number (system frame number, SFN), a slot index (slot index), a symbol index (symbol index), and the like, which respectively indicate a system frame number, a slot index, and a symbol index at which the arrival moment of the data packet of the first uplink service is located.

Alternatively, the first BAT may be represented by a communication clock (for example, a 5G time).

It can be understood that, the following condition needs to be satisfied in this case: A clock used by a URLLC application to correspondingly adjust times at which URLLC services are generated is kept synchronized with a clock used by the 5GS.

In a possible embodiment, the first information further indicates a manner of determining the to-be-reported first BAT.

Case 1: The first information further indicates that the first BAT is determined based on an uplink frame boundary of the terminal device.

Optionally, when the network device cannot determine the TA value of the terminal device, the network device sends the first information to indicate the terminal device to report the first BAT determined based on the uplink frame boundary. Correspondingly, the terminal device reports the first BAT determined by using the uplink frame boundary as a reference to the network device. For a specific manner of determining the first BAT, refer to the descriptions of the foregoing manner 1. Details are not described herein again.

Case 2: The first information further indicates that the first BAT is determined based on a downlink frame boundary and a timing advance TA value of the terminal device.

Optionally, when the network device cannot determine the TA value of the terminal device, the network device sends the first information to indicate the terminal device to report the first BAT determined based on the downlink frame boundary and the TA value. Correspondingly, the terminal device reports the first BAT determined by using the downlink frame boundary and the TA value as a reference to the network device. For a specific manner of determining the first BAT, refer to the descriptions of the foregoing manner 2. Details are not described herein again.

Case 3: The first information further indicates that the first BAT is determined based on a downlink frame boundary of the terminal device.

Optionally, when the network device can determine the TA value of the terminal device, the network device sends the first information to indicate the terminal device to report the first BAT determined based on the downlink frame boundary. Correspondingly, the terminal device reports the first BAT determined by using the downlink frame boundary to the network device. For a specific manner of determining the first BAT, refer to the descriptions of the foregoing manner 2. Details are not described herein again.

Optionally, when the network device cannot determine the TA value of the terminal device, the network device sends the first information to indicate the terminal device to report the first BAT determined based on the downlink frame boundary. Correspondingly, the terminal device reports the first BAT determined by using the downlink frame boundary to the network device. For a specific manner of determining the first BAT, refer to the descriptions of the foregoing manner 2. Details are not described herein again.

In a possible embodiment, the first information includes identification information of the first uplink service.

The identification information of the first uplink service is at least one of the following: a data radio bearer (data radio bearer, DRB) identifier to which the first uplink service belongs, a logical channel (logical channel, LCH) identifier to which the first uplink service belongs, a quality-of-service (quality-of-service, QoS) flow identifier (QoS flow ID, QFI) to which the first uplink service belongs, and the like. This is not limited in embodiments of this application.

The UE may determine a corresponding service (the first uplink service) based on the service identification information in the first information, and then determine the BAT corresponding to the data packet of the first uplink service.

It can be understood that the data packet of the first uplink service may be any to-be-transmitted data packet of the first uplink service, and the BAT may be a time at which the data packet of the first uplink service arrives at a service access point (service access point, SAP) of a packet data convergence protocol (packet data convergence protocol, PDCP) layer/service data adaptation protocol (service data adaptation protocol, SDAP) layer of the UE, or a time at which the data packet of the first uplink service arrives at a radio link control (radio link control, RLC) layer of the UE.

Optionally, the first information may further include information about a periodicity of the first uplink service.

According to this embodiment of this application, the terminal device may be indicated, by using the identification information of the service, to report the BAT of uplink data packets of the specified service, so that the network device is promptly aware of a BAT change of the uplink service data packet of the terminal device. This reduces a latency of waiting for transmission resources by the uplink service data packets, and meets low-latency requirements.

In a possible embodiment, the second information includes the identification information of the first uplink service.

The identification information of the first uplink service is the at least one of the following: the DRB identifier to which the first uplink service belongs, the LCH identifier to which the first uplink service belongs, the QFI to which the first uplink service belongs, and the like. This is not limited in embodiments of this application.

According to this embodiment of this application, the network device may identify, by using the service identification information included in the second information, whether the BAT reported by the terminal device is the BAT of the uplink data packet of the specified service, to be promptly aware of a BAT change of specified uplink service data packets of the terminal device. This reduces a latency of waiting for transmission resources by the uplink service data packets, and meets low-latency requirements.

It can be understood that the UE triggers reporting of the UL BAT after receiving, from the base station, the message for requesting to report the BAT. However, if the corresponding uplink service has not been started when the UE receives, from the base station, the message for requesting to report the BAT, the UE may trigger reporting of the UL BAT only when a 1^{st} uplink data packet of the uplink service arrives at an AS stratum after the uplink service is started.

In a possible embodiment, the first information further includes a first timer (prohibit timer).

Starting the first timer by the terminal device when sending the second information may be specifically starting the first timer when sending of the second information is triggered, or may be starting the first timer in a process of sending the second information. This is not limited in embodiments of this application.

When the first timer expires or does not run and the BAT corresponding to the first uplink service of the terminal device changes, for example, when a specific deviation exists between an actual BAT and a BAT estimated by the terminal device, the terminal device reports the BAT corresponding to the first uplink service to the network device again.

It can be understood that, with regard to reporting, by the terminal device, the BAT corresponding to the first uplink service to the network device again, a manner of determining the BAT is the same as the manner of determining the first BAT. The BAT may be determined based on the uplink frame boundary of the terminal device, may be determined based on the downlink frame boundary and the timing advance TA value of the terminal device, or may be determined based on the downlink frame boundary of the terminal device. For details, refer to the descriptions of the foregoing manner 1, manner 2, and manner 3. Details are not described herein again.

It can be understood that the first timer is used to control duration during which the terminal device is prohibited from reporting the BAT corresponding to the first uplink service again after the terminal device completes current BAT reporting.

According to this embodiment of this application, the network device can be promptly aware of a BAT change of uplink service data packets of the terminal device. This reduces a latency of waiting for transmission resources by the uplink service data packets, and meets low-latency requirements.

Optionally, when the base station (for example, the gNB) uses a CU-DU split architecture, after the base station receives the BAT reported by the UE, a CU and a DU in the base station may interact with each other in the following cases:
Case 1: The UE reports the BAT to the base station by using radio resource control (radio resource control, RRC) signaling.

Step 1: After receiving the BAT reported by the UE, the gNB-CU further indicates the BAT to the gNB-DU.

Optionally, in addition to indicating the BAT to the gNB-DU, the gNB-CU may further indicate at least one of a service identifier, a service periodicity, a BAT adaptation, and other parameter information to the gNB-DU, where the BAT adaptation indicates that the gNB-DU may feed back a BAT offset to the gNB-CU.

Step 2: After deriving the BAT offset based on the BAT, the gNB-DU feeds back the BAT offset to the gNB-CU.

The BAT offset indicates an adjustment amount that is of the BAT of the uplink service of the UE and that is expected by the gNB-DU.

Case 2: The UE reports the BAT to the base station by using a media access control-control element (media access control-control element, MAC CE).

Step 1: After receiving the BAT reported by the UE, the gNB-DU derives a BAT offset based on the BAT.

The BAT offset indicates an adjustment amount that is of the BAT of the uplink service of the UE and that is expected by the gNB-DU.

Step 2: The gNB-DU indicates the BAT offset to the gNB-CU.

Optionally, in addition to indicating the BAT offset to the gNB-CU, the gNB-DU may further indicate a service identifier and other parameter information to the gNB-CU.

In the foregoing case, if the gNB-CU further uses a CP-UP split architecture, the gNB-CU in the foregoing step may be specifically a gNB-CU-CP.

FIG. 6 is a schematic flowchart of a communication method according to an embodiment of this application. It can be understood that steps in this embodiment of this application may be considered as a proper variation of or supplement to the embodiment in FIG. 4. Alternatively, it can be understood that the communication method in this embodiment of this application may be considered as an embodiment that can be independently performed. This is not limited in this application. The communication method provided in this embodiment of this application is applied to the field of communication technologies, for example, URLLC service communication. The communication method includes but is not limited to the following steps:
S601: A network device sends first information to a terminal device. Correspondingly, the terminal device receives the first information from the network device.

This is consistent with step S401, and details are not described herein again.

S602: The terminal device sends second information to the network device. Correspondingly, the network device receives the second information from the terminal device.

This is consistent with step S402, and details are not described herein again.

It can be understood that the network device in this embodiment of this application may be corresponding to the network device in FIG. 4, and the terminal device in this embodiment of this application may be corresponding to the terminal device in FIG. 4. Therefore, for the network device and the terminal device in this embodiment of this application, refer to the descriptions of the network device and the terminal device in FIG. 4. Details are not described herein again.

A difference from the embodiment in FIG. 4 lies in that the base station sends a request message to trigger the UE to periodically report a BAT corresponding to a first uplink service.

Specifically, the first information in this embodiment of this application further includes a second timer, and the terminal device starts the second timer when sending the second information.

It can be understood that starting the second timer by the terminal device when sending the second information may be specifically starting the second timer when sending of the second information is triggered, or may be starting the second timer in a process of sending the second information. This is not limited in embodiments of this application.

S603: The terminal device reports the BAT corresponding to the first uplink service to the network device. Correspondingly, the network device receives, from the terminal device, the BAT corresponding to the first uplink service.

When the second timer expires, the terminal device reports the BAT corresponding to the first uplink service to the network device. Correspondingly, the network device receives, from the terminal device, the BAT corresponding to the first uplink service.

It can be understood that, with regard to reporting, by the terminal device, the BAT corresponding to the first uplink service to the network device, a manner of determining the BAT is the same as the manner of determining the first BAT. The BAT may be determined based on an uplink frame boundary of the terminal device, may be determined based on a downlink frame boundary and a timing advance TA value of the terminal device, or may be determined based on a downlink frame boundary of the terminal device. For details, refer to the descriptions of the foregoing manner 1, manner 2, and manner 3 in the embodiment shown in FIG. 4. Details are not described herein again.

Likewise, when reporting the BAT corresponding to the first uplink service to the network device, the terminal device starts the second timer again.

S604: The terminal device reports the BAT corresponding to the first uplink service to the network device. Correspondingly, the network device receives, from the terminal device, the BAT corresponding to the first uplink service.

When the second timer expires, the terminal device reports the BAT corresponding to the first uplink service to the network device again. Correspondingly, the network device receives, from the terminal device, the BAT corresponding to the first uplink service.

By analogy, each time the terminal device reports a BAT of the first uplink service to the network device, the terminal device starts the second timer, and reports a BAT of the first uplink service again when the second timer expires.

It can be understood that steps S603 and S604 are periodically performed based on duration indicated by the second timer, to periodically report the BAT of the first uplink service.

It can be understood that the UE triggers reporting of the UL BAT after receiving, from the base station, the message for requesting to report the BAT. However, if the corresponding uplink service has not been started when the UE receives, from the base station, the message for requesting to report the BAT, the UE may trigger reporting of the UL BAT only when a 1^{st} uplink data packet of the uplink service arrives at an AS stratum after the uplink service is started.

According to this embodiment of this application, the terminal device may be indicated, by using the second timer, to periodically report the BAT of the uplink service data packet, so that the network device is promptly aware of a BAT change of the uplink service data packet of the terminal device, to allocate appropriate transmission resources to the terminal device. This reduces a latency of waiting for transmission resources by the uplink service data packets, and meets low-latency requirements.

FIG. 7 is a schematic flowchart of a communication method according to an embodiment of this application. It can be understood that steps in this embodiment of this application may be considered as a proper variation of or supplement to the embodiment in FIG. 4. Alternatively, it can be understood that the communication method in this embodiment of this application may be considered as an embodiment that can be independently performed. This is not limited in this application. The communication method provided in this embodiment of this application is applied to the field of communication technologies, for example, URLLC service communication. The communication method includes but is not limited to the following steps:
S701: A network device sends first information to a terminal device. Correspondingly, the terminal device receives the first information from the network device.

This is consistent with step S401, and details are not described herein again.

S702: The terminal device sends second information to the network device. Correspondingly, the network device receives the second information from the terminal device.

This is consistent with step S402, and details are not described herein again.

It can be understood that the network device in this embodiment of this application may be corresponding to the network device in FIG. 4, and the terminal device in this embodiment of this application may be corresponding to the terminal device in FIG. 4. Therefore, for the network device and the terminal device in this embodiment of this application, refer to the descriptions of the network device and the terminal device in FIG. 4. Details are not described herein again.

A difference from the embodiment in FIG. 4 lies in that the base station configures a condition for reporting a BAT of a first uplink service by the UE, and when the condition is satisfied, the UE is triggered to report the BAT of the first uplink service.

Specifically, the first information in this embodiment of this application further includes a first threshold.

It can be understood that the first threshold is a threshold for triggering the terminal device to report the BAT.

Optionally, the first threshold may be a time value or a time range.

S703: A deviation between an expected arrival time and an actual arrival time of a data packet of the first uplink service exceeds the first threshold.

The terminal device detects the deviation between the expected arrival time and the actual arrival time of the data packet of the first uplink service. When the deviation is excessively large (exceeds the first threshold), step S704 is triggered to be performed, that is, the BAT corresponding to the first uplink service is reported to the network device.

Optionally, when the first threshold is a time value, it is detected whether the deviation between the expected arrival time and the actual arrival time of the data packet of the first uplink service exceeds the time value. When the deviation exceeds the time value, step S704 is triggered to be performed, that is, the BAT corresponding to the first uplink service is reported to the network device.

For example, the first threshold is 0.5 ms. When an actual arrival time of an uplink data packet is ahead of an expected arrival time by at least 0.5 ms or lags behind the expected arrival time by at least 0.5 ms, reporting of the BAT corresponding to the first uplink service is triggered once.

Optionally, when the first threshold is a time range, it is detected whether the deviation between the expected arrival time and the actual arrival time of the data packet of the first uplink service is outside the time range. When the deviation is outside the time range, step S704 is triggered to be performed, that is, the BAT corresponding to the first uplink service is reported to the network device.

For example, the first threshold is {0.5 ms, 1 ms}. When an actual arrival time of an uplink data packet is ahead of an expected arrival time by at least 0.5 ms or lags behind the expected arrival time by at least 1 ms, reporting of the BAT corresponding to the first uplink service is triggered once.

In a possible embodiment, the expected arrival time of the data packet of the first uplink service is determined based on a periodicity of the first uplink service and the reported first BAT.

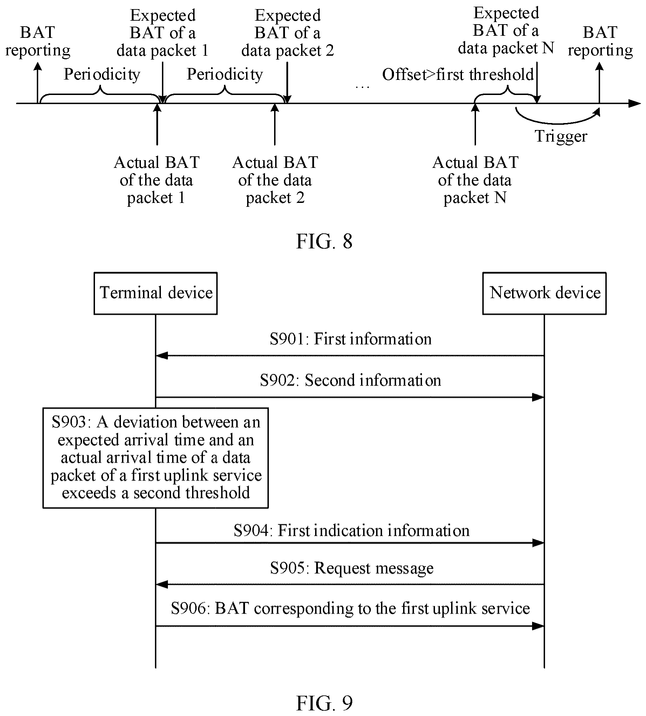

For details, refer to FIG. 8. FIG. 8 is a diagram of a condition for triggering BAT reporting according to an embodiment of this application.

As shown in FIG. 8, a deviation between an expected arrival time and an actual arrival time of a data packet of a first uplink service is an offset. When the offset is greater than a first threshold, BAT reporting is triggered.

It can be understood that the expected arrival time of the data packet of the first uplink service is determined based on a BAT that is of the data packet of the first uplink service and that is reported by the terminal device last time and the periodicity value of the first uplink service.

For example, if the UL BAT reported by the UE last time is SFN 0+slot 1, the periodicity of the first uplink service is 5 slots, and one radio frame includes 10 slots, expected arrival times of subsequent data packets of the first uplink service are SFN 0+slot 6, SFN 1+slot 1, and so on.

Optionally, the periodicity of the first uplink service may be included in the first information, may be preconfigured, may be provided by an upper layer of the terminal device for an access stratum (access stratum, AS), may be configured by a core network element (for example, an AMF) for the terminal device by using a non-access stratum (non-access stratum, NAS) message, or the like. This is not limited in embodiments of this application.

The periodicity of the first uplink service is obtained in the foregoing manner or the like, to determine the expected arrival time of the data packet of the first uplink service, so that the terminal device reports the BAT as required based on the condition for reporting the BAT corresponding to the uplink service.

S704: The terminal device reports the BAT corresponding to the first uplink service to the network device. Correspondingly, the network device receives, from the terminal device, the BAT corresponding to the first uplink service.

When the deviation between the expected arrival time and the actual arrival time of the data packet of the first uplink service exceeds the first threshold, the terminal device is triggered to report the BAT corresponding to the first uplink service to the network device. Correspondingly, the network device receives, from the terminal device, the BAT corresponding to the first uplink service.

It can be understood that, with regard to reporting, by the terminal device, the BAT corresponding to the first uplink service to the network device, a manner of determining the BAT is the same as the manner of determining the first BAT. The BAT may be determined based on an uplink frame boundary of the terminal device, may be determined based on a downlink frame boundary and a timing advance TA value of the terminal device, or may be determined based on a downlink frame boundary of the terminal device. For details, refer to the descriptions of the foregoing manner 1, manner 2, and manner 3 in the embodiment shown in FIG. 4. Details are not described herein again.

It can be understood that the UE triggers reporting of the UL BAT after receiving, from the base station, the message for requesting to report the BAT. However, if the corresponding uplink service has not been started when the UE receives, from the base station, the message for requesting to report the BAT, the UE may trigger reporting of the UL BAT only when a 1^{st} uplink data packet of the uplink service arrives at an AS stratum after the uplink service is started.

In a possible embodiment, the first information further includes a third timer (prohibit timer).

Starting the third timer by the terminal device when sending the second information may be specifically starting the third timer when sending of the second information is triggered, or may be starting the third timer in a process of sending the second information. This is not limited in embodiments of this application.

When the third timer expires or does not run and the deviation between the expected arrival time and the actual arrival time of the data packet of the first uplink service of the terminal device exceeds the first threshold, the terminal device reports the BAT corresponding to the first uplink service to the network device again.

It can be understood that, with regard to reporting, by the terminal device, the BAT corresponding to the first uplink service to the network device again, a manner of determining the BAT is the same as the manner of determining the first BAT. The BAT may be determined based on the uplink frame boundary of the terminal device, may be determined based on the downlink frame boundary and the timing advance TA value of the terminal device, or may be determined based on the downlink frame boundary of the terminal device. For details, refer to the descriptions of the foregoing manner 1, manner 2, and manner 3 in the embodiment shown in FIG. 4. Details are not described herein again.

It can be understood that the third timer is used to control duration during which the terminal device is prohibited from reporting the BAT corresponding to the first uplink service again after the terminal device completes current BAT reporting.

According to this embodiment of this application, the network device may configure, by using the first threshold included in the first information, the condition for reporting the BAT corresponding to the uplink service by the terminal device, so that the terminal device can report the BAT as required. In this way, the network device can learn whether the arrival time of the uplink service data packet drifts, to help the network device allocate an appropriate uplink transmission resource. In addition, unnecessary BAT reporting that may occur can be avoided, so that signaling overheads are reduced, and occupied transmission resources are reduced.

FIG. 9 is a schematic flowchart of a communication method according to an embodiment of this application. It can be understood that steps in this embodiment of this application may be considered as a proper variation of or supplement to the embodiment in FIG. 4, or may be considered as a proper variation of or supplement to the embodiment in FIG. 7. Alternatively, it can be understood that the communication method in this embodiment of this application may be considered as an embodiment that can be independently performed. This is not limited in this application. The communication method provided in this embodiment of this application is applied to the field of communication technologies, for example, URLLC service communication. The communication method includes but is not limited to the following steps:
S901: A network device sends first information to a terminal device. Correspondingly, the terminal device receives the first information from the network device.

This is consistent with step S401, and details are not described herein again.

S902: The terminal device sends second information to the network device. Correspondingly, the network device receives the second information from the terminal device.

This is consistent with step S402, and details are not described herein again.

It can be understood that the network device in this embodiment of this application may be corresponding to the network device in FIG. 4, and the terminal device in this embodiment of this application may be corresponding to the terminal device in FIG. 4. Therefore, for the network device and the terminal device in this embodiment of this application, refer to the descriptions of the network device and the terminal device in FIG. 4. Details are not described herein again.

A difference from the embodiment in FIG. 4 lies in that after a BAT of a first uplink service of the UE changes to a specified degree, the UE sends first indication information to the base station.

Specifically, the first information in this embodiment of this application further includes a second threshold.

It can be understood that the second threshold is a threshold for triggering the terminal device to perform step S904 (send the first indication information).

Optionally, the second threshold may be a time value or a time range.

S903: A deviation between an expected arrival time and an actual arrival time of a data packet of the first uplink service exceeds the second threshold.

The terminal device detects the deviation between the expected arrival time and the actual arrival time of the data packet of the first uplink service. When the deviation is excessively large (exceeds the second threshold), step S904 is triggered to be performed (the first indication information is sent), that is, the first indication information is sent to the network device.

Optionally, when the second threshold is a time value, it is detected whether the deviation between the expected arrival time and the actual arrival time of the data packet of the first uplink service exceeds the time value. When the deviation exceeds the time value, step S904 is triggered to be performed (the first indication information is sent), that is, the first indication information is sent to the network device.

For example, the second threshold is 0.5 ms. When an actual arrival time of an uplink data packet is ahead of an expected arrival time by at least 0.5 ms or lags behind the expected arrival time by at least 0.5 ms, sending of the first indication information is triggered once.

Optionally, when the second threshold is a time range, it is detected whether the deviation between the expected arrival time and the actual arrival time of the data packet of the first uplink service is outside the time range. When the deviation is outside the time range, step S904 is triggered to be performed (the first indication information is sent), that is, the first indication information is sent to the network device.

For example, the second threshold is {0.5 ms, 1 ms}. When an actual arrival time of an uplink data packet is ahead of an expected arrival time by at least 0.5 ms or lags behind the expected arrival time by at least 1 ms, sending of the first indication information is triggered once.

In a possible embodiment, the expected arrival time of the data packet of the first uplink service is determined based on a periodicity of the first uplink service and the reported first BAT.

For details, refer to the descriptions of FIG. 8. Details are not described herein again.

It can be understood that the expected arrival time of the data packet of the first uplink service is determined based on a BAT that is of the data packet of the first uplink service and that is reported by the terminal device last time and the periodicity value of the first uplink service.

Optionally, the periodicity of the first uplink service may be included in the first information, may be preconfigured, may be provided by an upper layer of the terminal device for an access stratum (access stratum, AS), may be configured by a core network element (for example, an AMF) for the terminal device by using a non-access stratum (non-access stratum, NAS) message, or the like. This is not limited in embodiments of this application.

The periodicity of the first uplink service is obtained in the foregoing manner or the like, to determine the expected arrival time of the data packet of the first uplink service. In this way, the first indication information is sent to the network device when the deviation between the actual arrival time and the expected arrival time of the data packet of the first uplink service is excessively large.

S904: The terminal device sends the first indication information to the network device. Correspondingly, the network device receives the first indication information from the terminal device.

When the deviation between the expected arrival time and the actual arrival time of the data packet of the first uplink service exceeds the second threshold, the terminal device is triggered to send the first indication information to the network device, to indicate that the deviation between the expected arrival time and the actual arrival time of the data packet of the first uplink service exceeds the second threshold. Correspondingly, the network device receives the first indication information from the terminal device.

S905: The network device sends a request message to the terminal device. Correspondingly, the terminal device receives the request message from the network device.

The request message is used to request the terminal device to report a BAT corresponding to the first uplink service.

Optionally, similar to a case in which the first information further includes the second threshold, the request message may include the second threshold, or may include a new threshold for "triggering the UE to send the first indication information". If the threshold for "triggering the UE to send the first indication information" is default, the UE may continue to use the stored second threshold.

S906: The terminal device reports the BAT corresponding to the first uplink service to the network device. Correspondingly, the network device receives, from the terminal device, the BAT corresponding to the first uplink service.

When the terminal device receives, from the network device, the message for requesting to report the BAT corresponding to the first uplink service, the terminal device reports the BAT corresponding to the first uplink service to the network device. Correspondingly, the network device receives, from the terminal device, the BAT corresponding to the first uplink service.

It can be understood that, with regard to reporting, by the terminal device, the BAT corresponding to the first uplink service to the network device, a manner of determining the BAT is the same as the manner of determining the first BAT. The BAT may be determined based on an uplink frame boundary of the terminal device, may be determined based on a downlink frame boundary and a timing advance TA value of the terminal device, or may be determined based on a downlink frame boundary of the terminal device. For details, refer to the descriptions of the foregoing manner 1, manner 2, and manner 3 in the embodiment shown in FIG. 4. Details are not described herein again.

It can be understood that the second threshold is a threshold for triggering the terminal device to report the first indication information. When detecting that the difference between the expected arrival time and the actual arrival time of the data packet of the first uplink service is excessively large, the terminal device sends the first indication information to the network device, to indicate that the BAT of the first uplink service changes, and that the deviation between the expected arrival time and the actual arrival time of the data packet of the first uplink service exceeds the second threshold indicated by the network device.

It can be understood that the UE triggers reporting of the UL BAT after receiving, from the base station, the message for requesting to report the BAT. However, if the corresponding uplink service has not been started when the UE receives, from the base station, the message for requesting to report the BAT, the UE may trigger reporting of the UL BAT only when a 1^{st} uplink data packet of the uplink service arrives at an AS stratum after the uplink service is started.

In a possible embodiment, the first information further includes a fourth timer (prohibit timer).

Starting the fourth timer by the terminal device when sending the first indication information may be specifically starting the fourth timer when sending of the first indication information is triggered, or may be starting the fourth timer in a process of sending the first indication information. This is not limited in embodiments of this application.

When the fourth timer expires or does not run and the deviation between the expected arrival time and the actual arrival time of the data packet of the first uplink service of the terminal device exceeds the second threshold, the terminal device sends the first indication information to the network device again. After receiving, from the network device, the message for requesting to report the BAT, the terminal device reports the BAT corresponding to the first uplink service to the network device again.

It can be understood that, with regard to reporting, by the terminal device, the BAT corresponding to the first uplink service to the network device again, a manner of determining the BAT is the same as the manner of determining the first BAT. The BAT may be determined based on the uplink frame boundary of the terminal device, may be determined based on the downlink frame boundary and the timing advance TA value of the terminal device, or may be determined based on the downlink frame boundary of the terminal device. For details, refer to the descriptions of the foregoing manner 1, manner 2, and manner 3 in the embodiment shown in FIG. 4. Details are not described herein again.

It can be understood that the fourth timer is used to control duration during which the terminal device is prohibited from sending the first indication information again after the terminal device completes current sending of the first indication information.

According to this embodiment of this application, the network device may configure, by using the second threshold included in the first information, a condition for sending the first indication information by the terminal device. In this way, the network device can learn whether the arrival time of the uplink service data packet drifts, to allocate appropriate transmission resources to the terminal device. This reduces a latency of waiting for transmission resources by the uplink service data packets, and meets low-latency requirements.

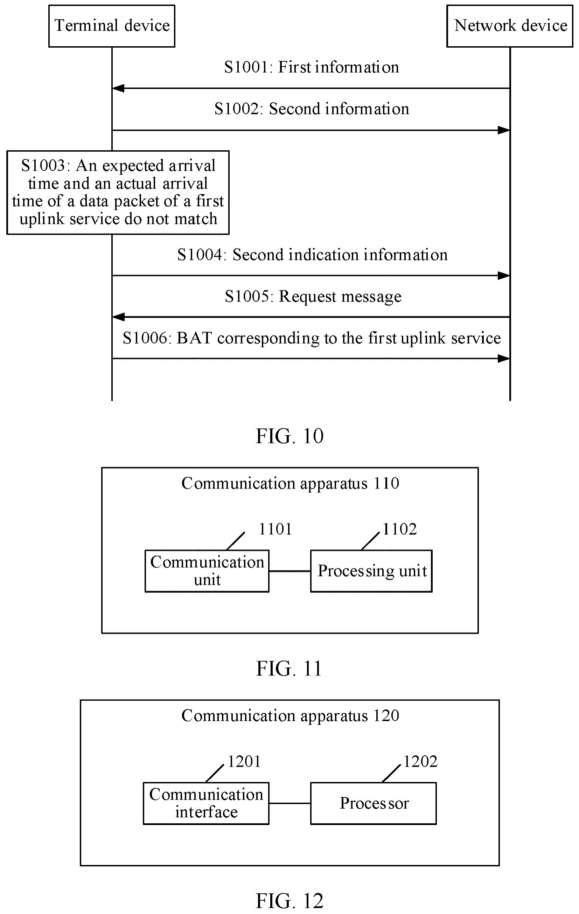

FIG. 10 is a schematic flowchart of a communication method according to an embodiment of this application. It can be understood that steps in this embodiment of this application may be considered as a proper variation or supplement to the embodiment in FIG. 4. Alternatively, it can be understood that the communication method in this embodiment of this application may be considered as an embodiment that can be independently performed. This is not limited in this application. The communication method provided in this embodiment of this application is applied to the field of communication technologies, for example, URLLC service communication. The communication method includes but is not limited to the following steps:
S1001: A network device sends first information to a terminal device. Correspondingly, the terminal device receives the first information from the network device.

This is consistent with step S401, and details are not described herein again.

S1002: The terminal device sends second information to the network device. Correspondingly, the network device receives the second information from the terminal device.

This is consistent with step S402, and details are not described herein again.

It can be understood that the network device in this embodiment of this application may be corresponding to the network device in FIG. 4, and the terminal device in this embodiment of this application may be corresponding to the terminal device in FIG. 4. Therefore, for the network device and the terminal device in this embodiment of this application, refer to the descriptions of the network device and the terminal device in FIG. 4. Details are not described herein again.

A difference from the embodiment in FIG. 4 lies in that after a BAT of a first uplink service of the UE changes, the UE sends second indication information to the base station.

Specific steps are as follows.

Step S1003: An expected arrival time and an actual arrival time of a data packet of the first uplink service do not match.

The terminal device detects that the expected arrival time and the actual arrival time of the data packet of the first uplink service do not match, step S1004 is triggered to be performed (the second indication information is sent), that is, the second indication information is sent to the network device.

It can be understood that, that the expected arrival time and the actual arrival time of the data packet of the first uplink service do not match means that the expected arrival time and the actual arrival time of the data packet of the first uplink service are different.

In a possible embodiment, the expected arrival time of the data packet of the first uplink service is determined based on a periodicity of the first uplink service and the reported first BAT.

For details, refer to the descriptions of FIG. 8. Details are not described herein again.

It can be understood that the expected arrival time of the data packet of the first uplink service is determined based on a BAT that is of the data packet of the first uplink service and that is reported by the terminal device last time and the periodicity value of the first uplink service.

Optionally, the periodicity of the first uplink service may be included in the first information, may be preconfigured, may be provided by an upper layer of the terminal device for an access stratum (access stratum, AS), may be configured by a core network element (for example, an AMF) for the terminal device by using a non-access stratum (non-access stratum, NAS) message, or the like. This is not limited in embodiments of this application.

The periodicity of the first uplink service is obtained in the foregoing manner or the like, to determine the expected arrival time of the data packet of the first uplink service. In this way, the second indication information is sent to the network device when the actual arrival time and the expected arrival time of the data packet of the first uplink service do not match.

S1004: The terminal device sends the second indication information to the network device. Correspondingly, the network device receives the second indication information from the terminal device.

When the expected arrival time and the actual arrival time of the data packet of the first uplink service do not match, the terminal device is triggered to send the second indication information to the network device, where the second indication information indicates that the BAT of the data packet of the first uplink service changes. Correspondingly, the network device receives the second indication information from the terminal device.

S1005: The network device sends a request message to the terminal device. Correspondingly, the terminal device receives the request message from the network device.

The request message is used to request the terminal device to report a BAT corresponding to the first uplink service.

S1006: The terminal device reports the BAT corresponding to the first uplink service to the network device. Correspondingly, the network device receives, from the terminal device, the BAT corresponding to the first uplink service.

When the terminal device receives, from the network device, the message for requesting to report the BAT corresponding to the first uplink service, the terminal device reports the BAT corresponding to the first uplink service to the network device. Correspondingly, the network device receives, from the terminal device, the BAT corresponding to the first uplink service.

It can be understood that, with regard to reporting, by the terminal device, the BAT corresponding to the first uplink service to the network device, a manner of determining the BAT is the same as the manner of determining the first BAT. The BAT may be determined based on an uplink frame boundary of the terminal device, may be determined based on a downlink frame boundary and a timing advance TA value of the terminal device, or may be determined based on a downlink frame boundary of the terminal device. For details, refer to the descriptions of the foregoing manner 1, manner 2, and manner 3 in the embodiment shown in FIG. 4. Details are not described herein again.

It can be understood that the UE triggers reporting of the UL BAT after receiving, from the base station, the message for requesting to report the BAT. However, if the corresponding uplink service has not been started when the UE receives, from the base station, the message for requesting to report the BAT, the UE may trigger reporting of the UL BAT only when a 1^{st} uplink data packet of the uplink service arrives at an AS stratum after the uplink service is started.

In a possible embodiment, the first information further includes a fifth timer (prohibit timer).

Starting the fifth timer by the terminal device when sending the second indication information may be specifically starting the fifth timer when sending of the second indication information is triggered, or may be starting the fifth timer in a process of sending the second indication information. This is not limited in embodiments of this application.

When the fifth timer expires or does not run and the expected arrival time and the actual arrival time of the data packet of the first uplink service of the terminal device do not match, the terminal device sends the second indication information to the network device again. After receiving, from the network device, the message for requesting to report the BAT, the terminal device reports the BAT corresponding to the first uplink service to the network device again.

It can be understood that, with regard to reporting, by the terminal device, the BAT corresponding to the first uplink service to the network device again, a manner of determining the BAT is the same as the manner of determining the first BAT. The BAT may be determined based on the uplink frame boundary of the terminal device, may be determined based on the downlink frame boundary and the timing advance TA value of the terminal device, or may be determined based on the downlink frame boundary of the terminal device. For details, refer to the descriptions of the foregoing manner 1, manner 2, and manner 3 in the embodiment shown in FIG. 4. Details are not described herein again.

It can be understood that the fifth timer is used to control duration during which the terminal device is prohibited from sending the second indication information again after the terminal device completes current sending of the first indication information.

According to this embodiment of this application, the terminal device sends the second indication information to the network device when the expected arrival time and the actual arrival time of the data packet of the first uplink service do not match. In this way, the network device can learn whether the arrival time of the uplink service data packet drifts, to allocate appropriate transmission resources to the terminal device. This reduces a latency of waiting for transmission resources by the uplink service data packets, and meets low-latency requirements.

The foregoing details the methods in embodiments of this application. The following provides an apparatus for implementing any one of the methods in embodiments of this application. For example, an apparatus including units (or means) for implementing steps performed by a device in any one of the foregoing methods is provided.

FIG. 11 is a diagram of a structure of a communication apparatus according to an embodiment of this application.

As shown in FIG. 11, the communication apparatus 110 may include a communication unit 1101 and a processing unit 1102. The communication unit 1101 and the processing unit 1102 may be software, hardware, or a combination of software and hardware.

The communication unit 1101 may implement a sending function and/or a receiving function, and the communication unit 1101 may also be described as a transceiver unit. Alternatively, the communication unit 1101 may be a unit integrating an obtaining unit and a sending unit. The obtaining unit is configured to implement a receiving function, and the sending unit is configured to implement a sending function. Optionally, the communication unit 1101 may be configured to receive information sent by another apparatus, and may be further configured to send information to the another apparatus.

In a possible design, the communication apparatus 110 may be corresponding to the terminal device in the method embodiments shown in FIG. 4, FIG. 6, FIG. 7, FIG. 9, and FIG. 10. For example, the communication apparatus 110 may be the terminal device, or may be a chip in the terminal device. The communication apparatus 110 may include units configured to perform the operations performed by the terminal device in the method embodiments shown in FIG. 4, FIG. 6, FIG. 7, FIG. 9, and FIG. 10. In addition, the units in the communication apparatus 110 are separately configured to implement the operations performed by the terminal device in the method embodiments shown in FIG. 4, FIG. 6, FIG. 7, FIG. 9, and FIG. 10. The units are described as follows.

In a possible design 1, the apparatus includes:
a communication unit 1101, configured to receive first information from a network device, where the first information is used to request a first burst arrival time BAT corresponding to a first uplink service; and
the communication unit 1101 is further configured to send second information to the network device, where the second information includes information about the first BAT, and the first BAT is determined based on an uplink frame boundary of the terminal device.

In a possible design 2, the apparatus includes:
a communication unit 1101, configured to receive first information from a network device, where the first information is used to request a first burst arrival time BAT corresponding to a first uplink service; and
the communication unit 1101 is further configured to send second information to the network device, where the second information includes information about the first BAT, and the first BAT is determined based on a downlink frame boundary and a timing advance TA value of the terminal device.

In a possible design 3, the apparatus includes:
a communication unit 1101, configured to receive first information from a network device, where the first information is used to request a first burst arrival time BAT corresponding to a first uplink service;
the communication unit 1101 is further configured to send second information to the network device, where the second information includes information about the first BAT, and the first BAT is determined based on a downlink frame boundary of the terminal device; and
the communication unit 1101 is further configured to send third information to the network device, where the third information includes a TA value of the terminal device.

In a possible implementation of any one of the foregoing designs, the apparatus further includes:
a processing unit 1102, configured to determine the first BAT.

In a possible implementation of any one of the foregoing designs, the first BAT is represented by at least one of the following: a system frame number, a slot index, and a symbol index.

In a possible implementation of the foregoing design 1, the first information further indicates that the first BAT is determined based on the uplink frame boundary of the terminal device.

In a possible implementation of the foregoing design 2, the first information further indicates that the first BAT is determined based on the downlink frame boundary and the timing advance TA value of the terminal device.

In a possible implementation of the foregoing design 3, the first information further indicates that the first BAT is determined based on the downlink frame boundary of the terminal device.

In a possible implementation of any one of the foregoing designs, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

In a possible implementation of any one of the foregoing designs, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In a possible implementation of any one of the foregoing designs, the first information further includes a first timer;
the processing unit 1102 is further configured to start the first timer when the second information is sent; and
the communication unit 1101 is further configured to: when the BAT corresponding to the first uplink service changes and the first timer expires or does not run, report the BAT corresponding to the first uplink service to the network device.

In a possible implementation of any one of the foregoing designs, the first information further includes a second timer;
the processing unit 1102 is further configured to start the second timer when the second information is sent; and
the communication unit 1101 is further configured to: when the second timer expires, report the BAT corresponding to the first uplink service to the network device.

In a possible implementation of any one of the foregoing designs, the first information further includes a first threshold; and
the communication unit 1101 is further configured to: when a deviation between an expected arrival time and an actual arrival time of a data packet of the first uplink service exceeds the first threshold, report the BAT corresponding to the first uplink service to the network device.

In a possible implementation of any one of the foregoing designs, the first threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a third timer;
the processing unit 1102 is further configured to start the third timer when the second information is sent; and
the communication unit 1101 is further configured to: when the deviation between the expected arrival time and the actual arrival time of the data packet of the first uplink service exceeds the first threshold and the third timer expires or does not run, report the BAT corresponding to the first uplink service to the network device.

In a possible implementation of any one of the foregoing designs, the first information further includes a second threshold;
the communication unit 1101 is further configured to: when a deviation between an expected arrival time and an actual arrival time of a data packet of the first uplink service exceeds the second threshold, send first indication information to the network device, where the first indication information indicates that the deviation between the expected arrival time and the actual arrival time of the data packet of the first uplink service exceeds the second threshold;
the communication unit 1101 is further configured to receive a request message from the network device, where the request message is used to request the BAT corresponding to the first uplink service; and
the communication unit 1101 is further configured to report the BAT corresponding to the first uplink service to the network device.

In a possible implementation of any one of the foregoing designs, the second threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fourth timer;
the processing unit 1102 is further configured to start the fourth timer when the first indication information is sent; and
the communication unit 1101 is further configured to: when the deviation between the expected arrival time and the actual arrival time of the data packet of the first uplink service exceeds the second threshold and the fourth timer expires or does not run, send the first indication information to the network device.

In a possible implementation of any one of the foregoing designs, the communication unit 1101 is further configured to: when an expected arrival time and an actual arrival time of a data packet of the first uplink service do not match, send second indication information to the network device, where the second indication information indicates that the BAT of the data packet of the first uplink service changes;
the communication unit 1101 is further configured to receive a request message from the network device, where the request message is used to request the BAT corresponding to the first uplink service; and
the communication unit 1101 is further configured to report the BAT corresponding to the first uplink service to the network device.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fifth timer;
the processing unit 1102 is further configured to start the fifth timer when the second indication information is sent; and
the communication unit 1101 is further configured to: when the expected arrival time and the actual arrival time of the data packet of the first uplink service do not match and the fifth timer expires or does not run, send the second indication information to the network device.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used for the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

In another possible design of the communication apparatus 110 shown in FIG. 11, the communication apparatus 110 may be corresponding to the network device in the method embodiments shown in FIG. 4, FIG. 6, FIG. 7, FIG. 9, and FIG. 10. For example, the communication apparatus 110 may be the network device, or may be a chip in the network device. The communication apparatus 110 may include units configured to perform the operations performed by the network device in the method embodiments shown in FIG. 4, FIG. 6, FIG. 7, FIG. 9, and FIG. 10. In addition, the units in the communication apparatus 110 are separately configured to implement the operations performed by the network device in the method embodiments shown in FIG. 4, FIG. 6, FIG. 7, FIG. 9, and FIG. 10. The units are described as follows.

In a possible design 1, the apparatus includes:
a communication unit 1101, configured to send first information to a terminal device, where the first information is used to request a first burst arrival time BAT corresponding to a first uplink service; and
the communication unit 1101 is further configured to receive second information from the terminal device, where the second information includes information about the first BAT, and the first BAT is determined based on an uplink frame boundary of the terminal device.

In a possible design 2, the apparatus includes:
a communication unit 1101, configured to send first information to a terminal device, where the first information is used to request a first burst arrival time BAT corresponding to a first uplink service; and
the communication unit 1101 is further configured to receive second information from the terminal device, where the second information includes information about the first BAT, and the first BAT is determined based on a downlink frame boundary and a timing advance TA value of the terminal device.

In a possible design 3, the apparatus includes:
a communication unit 1101, configured to send first information to a terminal device, where the first information is used to request a first burst arrival time BAT corresponding to a first uplink service;
the communication unit 1101 is further configured to receive second information from the terminal device, where the second information includes information about the first BAT, and the first BAT is determined based on a downlink frame boundary of the terminal device; and
the communication unit 1101 is further configured to receive third information from the terminal device, where the third information includes a TA value of the terminal device.

In a possible implementation of any one of the foregoing designs, the apparatus further includes:
a processing unit 1102, configured to determine the first information.

In a possible implementation of any one of the foregoing designs, the first BAT is represented by at least one of the following: a system frame number, a slot index, and a symbol index.

In a possible implementation of the foregoing design 1, the first information further indicates that the first BAT is determined based on the uplink frame boundary of the terminal device.

In a possible implementation of the foregoing design 2, the first information further indicates that the first BAT is determined based on the downlink frame boundary and the timing advance TA value of the terminal device.

In a possible implementation of the foregoing design 3, the first information further indicates that the first BAT is determined based on the downlink frame boundary of the terminal device.

In a possible implementation of any one of the foregoing designs, the first information includes identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

In a possible implementation of any one of the foregoing designs, the second information further includes the identification information of the first uplink service, and the identification information of the first uplink service is the at least one of the following:
the data radio bearer identifier to which the first uplink service belongs, the logical channel identifier to which the first uplink service belongs, and the quality-of-service flow identifier to which the first uplink service belongs.

In a possible implementation of any one of the foregoing designs, the first information further includes a first timer, and the first timer is used by the terminal device to report, when the BAT corresponding to the first uplink service changes and the first timer expires or does not run, the BAT corresponding to the first uplink service.

In a possible implementation of any one of the foregoing designs, the first information further includes a second timer, and the second timer is used by the terminal device to report, when the second timer expires, the BAT corresponding to the first uplink service.

In a possible implementation of any one of the foregoing designs, the first information further includes a first threshold, and the first threshold is used by the terminal device to report, when a deviation between an expected arrival time and an actual arrival time of a data packet of the first uplink service exceeds the first threshold, the BAT corresponding to the first uplink service.

In a possible implementation of any one of the foregoing designs, the first threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a third timer, and the third timer is used by the terminal device to report, when the deviation between the expected arrival time and the actual arrival time of the data packet of the first uplink service exceeds the first threshold and the third timer expires or does not run, the BAT corresponding to the first uplink service.

In a possible implementation of any one of the foregoing designs, the first information further includes a second threshold;
the communication unit 1101 is further configured to receive first indication information from the terminal device, where the first indication information indicates that a deviation between an expected arrival time and an actual arrival time of a data packet of the first uplink service exceeds the second threshold;
the communication unit 1101 is further configured to send a request message to the terminal device, where the request message is used to request the BAT corresponding to the first uplink service; and
the communication unit 1101 is further configured to receive, from the terminal device, the BAT corresponding to the first uplink service.

In a possible implementation of any one of the foregoing designs, the second threshold is a time value or a time range.

In a possible implementation of any one of the foregoing designs, the expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fourth timer, and the fourth timer is used by the terminal device to send the first indication information when the deviation between the expected arrival time and the actual arrival time of the data packet of the first uplink service exceeds the second threshold and the fourth timer expires or does not run.

In a possible implementation of any one of the foregoing designs, the communication unit 1101 is further configured to receive second indication information from the terminal device, where the second indication information indicates that the BAT of a data packet of the first uplink service changes;
the communication unit 1101 is further configured to send a request message to the terminal device, where the request message is used to request the BAT corresponding to the first uplink service; and
the communication unit 1101 is further configured to receive, from the terminal device, the BAT corresponding to the first uplink service.

In a possible implementation of any one of the foregoing designs, an expected arrival time of the data packet of the first uplink service is determined based on a periodicity of the first uplink service and a reported second BAT, and the second BAT is a BAT reported immediately before the first BAT.

In a possible implementation of any one of the foregoing designs, the first information further includes the periodicity of the first uplink service, or the periodicity of the first uplink service is preconfigured.

In a possible implementation of any one of the foregoing designs, the first information further includes a fifth timer, and the fifth timer is used by the terminal device to send the second indication information when the expected arrival time and an actual arrival time of the data packet of the first uplink service do not match and the fifth timer expires or does not run.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used for the communication device, the communication unit may be a communication interface (an input/output interface), an interface circuit, an output circuit, an input circuit, a pin, a related circuit, or the like of the chip (system) or the circuit, and the processing unit may be at least one processor, processing circuit, logic circuit, or the like.

According to this embodiment of this application, the units in the apparatus shown in FIG. 11 may be separately or all combined into one or more other units, or one (or more) of the units in the apparatus may be further divided into a plurality of units with more detailed functions. In this way, same operations can be implemented without affecting implementation of technical effects of this embodiment of this application. The foregoing units are obtained through division based on logical functions. In actual application, a function of one unit may be implemented by a plurality of units, or functions of a plurality of units are implemented by one unit. In other embodiments of this application, the electronic device may alternatively include other units. In actual application, the functions may be alternatively implemented with assistance of the other units, and may be implemented by a plurality of units in collaboration.

It should be noted that for implementation of the units, refer to corresponding descriptions of the method embodiments shown in FIG. 4, FIG. 6, FIG. 7, FIG. 9, and FIG. 10.

In the communication apparatus 110 described in FIG. 11, the first BAT determined by using the uplink frame boundary of the terminal device as a reference is reported to the network device, so that the network device can be promptly aware of the burst arrival time of data packets of the first uplink service of the terminal device. This reduces a latency of waiting for transmission resources by the uplink service data packets, and meets low-latency requirements.

FIG. 12 is a diagram of a structure of a communication apparatus according to an embodiment of this application.

It should be understood that a communication apparatus 120 shown in FIG. 12 is merely an example. The communication apparatus in this embodiment of this application may further include other components, includes a component with a function similar to that of each component in FIG. 12, or does not necessarily include all components in FIG. 12.

The communication apparatus 120 includes a communication interface 1201 and at least one processor 1202.

The communication apparatus 120 may be corresponding to any network element or device in a network device or a terminal device. The communication interface 1201 is configured to: send a signal and receive a signal, and the at least one processor 1202 executes program instructions, to enable the communication apparatus 120 to implement a corresponding procedure of a method performed by a corresponding device in the foregoing method embodiments.

In a possible design, the communication apparatus 120 may be corresponding to the terminal device in the method embodiments shown in FIG. 4, FIG. 6, FIG. 7, FIG. 9, and FIG. 10. For example, the communication apparatus 120 may be the terminal device, or may be a chip in the terminal device. The communication apparatus 120 may include components configured to perform the operations performed by the terminal device in the foregoing method embodiments. In addition, the components in the communication apparatus 120 are separately configured to implement the operations performed by the terminal device in the foregoing method embodiments. Specific operations may be as follows:
receiving first information from a network device, where the first information is used to request a first burst arrival time BAT corresponding to a first uplink service; and
sending second information to the network device, where the second information includes information about the first BAT, and the first BAT is determined based on an uplink frame boundary of the terminal device.

In another possible design, the communication apparatus 120 may be corresponding to the network device in the method embodiments shown in FIG. 4, FIG. 6, FIG. 7, FIG. 9, and FIG. 10. For example, the communication apparatus 120 may be the network device, or may be a chip in the network device. The communication apparatus 120 may include components configured to perform the operations performed by the network device in the foregoing method embodiments. In addition, the components in the communication apparatus 120 are separately configured to implement the operations performed by the network device in the foregoing method embodiments. Specific operations may be as follows:
sending first information to a terminal device, where the first information is used to request a first burst arrival time BAT corresponding to a first uplink service; and
receiving second information from the terminal device, where the second information includes information about the first BAT, and the first BAT is determined based on an uplink frame boundary of the terminal device.

In the communication apparatus 120 described in FIG. 12, the first BAT determined by using the uplink frame boundary of the terminal device as a reference is reported to the network device, so that the network device can be promptly aware of the burst arrival time of data packets of the first uplink service of the terminal device. This reduces a latency of waiting for transmission resources by the uplink service data packets, and meets low-latency requirements.

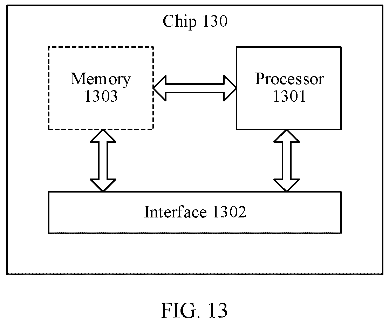

For a case in which the communication apparatus may be a chip or a chip system, refer to a diagram of a structure of a chip shown in FIG. 13.

As shown in FIG. 13, the chip 130 includes a processor 1301 and an interface 1302. There may be one or more processors 1301, and there may be a plurality of interfaces 1302. It should be noted that functions corresponding to the processor 1301 and the interface 1302 may be implemented by using a hardware design, may be implemented by using a software design, or may be implemented by using a combination of software and hardware. This is not limited herein.

Optionally, the chip 130 may further include a memory 1303, and the memory 1303 is configured to store necessary program instructions and data.

In this application, the processor 1301 may be configured to invoke, from the memory 1303, a program for implementing, by one or more devices or network elements in the network device and the terminal device, the communication method provided in one or more embodiments of this application, and execute instructions included in the program. The interface 1302 may be configured to output an execution result of the processor 1301. In this application, the interface 1302 may be specifically configured to output each message or each piece of information of the processor 1301.

For the communication method provided in one or more embodiments of this application, refer to the embodiments shown in FIG. 4, FIG. 6, FIG. 7, FIG. 9, and FIG. 10. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 4, FIG. 6, FIG. 7, FIG. 9, and FIG. 10 may be implemented.

According to the methods provided in embodiments of this application, an embodiment of this application further provides a computer program product. The computer program product includes a computer program. When the computer program is run on a processor, the methods shown in FIG. 4, FIG. 6, FIG. 7, FIG. 9, and FIG. 10 may be implemented.

An embodiment of this application further provides a system. The system includes at least one of the following: the communication apparatus 110, the communication apparatus 120, or the chip 130, and is configured to perform steps performed by a corresponding device in any one of the embodiments in FIG. 4, FIG. 6, FIG. 7, FIG. 9, and FIG. 10.

An embodiment of this application further provides a system. The system includes a network device and a terminal device. The terminal device is configured to perform the steps performed by the terminal device in any one of the embodiments in FIG. 4, FIG. 6, FIG. 7, FIG. 9, and FIG. 10. The network device is configured to perform the steps performed by the network device in any one of the embodiments in FIG. 4, FIG. 6, FIG. 7, FIG. 9, and FIG. 10.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), a general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip. The processing apparatus can implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware in the processor.

It can be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and the methods that are described in this specification is intended to include but is not limited to these memories and any other appropriate types of memories.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

The units in the foregoing apparatus embodiments are completely corresponding to electronic devices in the method embodiments, and corresponding modules or units perform corresponding steps. For example, the communication unit (transceiver) performs receiving or sending steps in the method embodiments, and steps other than the sending and receiving steps may be performed by the processing unit (processor). For specific functions of the units, refer to the corresponding method embodiments. There may be one or more processors.

It can be understood that in embodiments of this application, the electronic devices may perform some or all of the steps in embodiment of this application. These steps or operations are merely examples. In embodiments of this application, other steps or variations of various steps may be further performed. In addition, the steps may be performed in a sequence different from a sequence presented in embodiments of this application, and not all the operations in embodiments of this application may be performed.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatuses, and units described above, refer to the corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
receiving first information from a network device, wherein the first information is used to request a first burst arrival time BAT corresponding to a first uplink service; and
sending second information to the network device, wherein the second information comprises information about the first BAT, and the first BAT is determined based on an uplink frame boundary of a terminal device.

2. The method according to claim 1, wherein the first BAT is represented by at least one of the following: a system frame number, a slot index, and a symbol index.

3. The method according to claim 1 or 2, wherein the first information further indicates that the first BAT is determined based on the uplink frame boundary of the terminal device.

4. The method according to any one of claims 1 to 3, wherein the first information comprises identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

5. The method according to any one of claims 1 to 4, wherein the second information further comprises identification information of the first uplink service, and the identification information of the first uplink service is the at least one of the following:
a data radio bearer identifier to which the first uplink service belongs, a logical channel identifier to which the first uplink service belongs, and a quality-of-service flow identifier to which the first uplink service belongs.

6. The method according to any one of claims 1 to 5, wherein the first information further comprises a first timer, and the method further comprises:
starting the first timer for the first uplink service when the second information is sent; and
when the BAT corresponding to the first uplink service changes and the first timer corresponding to the first uplink service expires or does not run, reporting the BAT corresponding to the first uplink service to the network device.

7. The method according to any one of claims 1 to 6, wherein the first information further comprises a second timer, and the method further comprises:
starting the second timer when the second information is sent; and
when the second timer expires, reporting the BAT corresponding to the first uplink service to the network device.

8. The method according to any one of claims 1 to 6, wherein the first information further comprises a first threshold, and the method further comprises:
when a deviation between an expected arrival time and an actual arrival time of a data packet of the first uplink service exceeds the first threshold, reporting the BAT corresponding to the first uplink service to the network device.

9. The method according to claim 8, wherein the expected arrival time of the data packet of the first uplink service is determined based on a periodicity of the first uplink service and a reported second BAT, and the second BAT is a BAT reported immediately before the first BAT.

10. The method according to claim 8 or 9, wherein the first information further comprises a third timer, and the method further comprises:
starting the third timer when the second information is sent; and
when the deviation between the expected arrival time and the actual arrival time of the data packet of the first uplink service exceeds the first threshold and the third timer expires or does not run, reporting the BAT corresponding to the first uplink service to the network device.

11. The method according to any one of claims 1 to 6, wherein the first information further comprises a second threshold, and the method further comprises:
when a deviation between an expected arrival time and an actual arrival time of a data packet of the first uplink service exceeds the second threshold, sending first indication information to the network device, wherein the first indication information indicates that the deviation between the expected arrival time and the actual arrival time of the data packet of the first uplink service exceeds the second threshold;
receiving a request message from the network device, wherein the request message is used to request the BAT corresponding to the first uplink service; and
reporting the BAT corresponding to the first uplink service to the network device.

12. The method according to claim 11, wherein the expected arrival time of the data packet of the first uplink service is determined based on a periodicity of the first uplink service and a reported second BAT, and the second BAT is a BAT reported immediately before the first BAT.

13. The method according to claim 11 or 12, wherein the first information further comprises a fourth timer, and the method further comprises:
starting the fourth timer when the first indication information is sent; and
when the deviation between the expected arrival time and the actual arrival time of the data packet of the first uplink service exceeds the second threshold and the fourth timer expires or does not run, sending the first indication information to the network device.

14. The method according to any one of claims 1 to 6, wherein the method further comprises:
when an expected arrival time and an actual arrival time of a data packet of the first uplink service do not match, sending second indication information to the network device, wherein the second indication information indicates that the BAT of the data packet of the first uplink service changes;
receiving a request message from the network device, wherein the request message is used to request the BAT corresponding to the first uplink service; and
reporting the BAT corresponding to the first uplink service to the network device.

15. The method according to claim 14, wherein the expected arrival time of the data packet of the first uplink service is determined based on a periodicity of the first uplink service and a reported second BAT, and the second BAT is a BAT reported immediately before the first BAT.

16. The method according to claim 14 or 15, wherein the first information further comprises a fifth timer, and the method further comprises:
starting the fifth timer when the second indication information is sent; and
when the expected arrival time and the actual arrival time of the data packet of the first uplink service do not match and the fifth timer expires or does not run, sending the second indication information to the network device.

17. A communication method, comprising:
sending first information to a terminal device, wherein the first information is used to request a first burst arrival time BAT corresponding to a first uplink service; and
receiving second information from the terminal device, wherein the second information comprises information about the first BAT, and the first BAT is determined based on an uplink frame boundary of the terminal device.

18. The method according to claim 17, wherein the first BAT is represented by at least one of the following: a system frame number, a slot index, and a symbol index.

19. The method according to claim 17 or 18, wherein the first information further indicates that the first BAT is determined based on the uplink frame boundary of the terminal device.

20. The method according to any one of claims 17 to 19, wherein the first information comprises identification information of the first uplink service, and the identification information of the first uplink service is at least one of the following:
a data radio bearer identifier to which the first uplink service belongs, a logical channel identifier to which the first uplink service belongs, and a quality-of-service flow identifier to which the first uplink service belongs.

21. The method according to any one of claims 17 to 20, wherein the second information further comprises identification information of the first uplink service, and the identification information of the first uplink service is the at least one of the following:
a data radio bearer identifier to which the first uplink service belongs, a logical channel identifier to which the first uplink service belongs, and a quality-of-service flow identifier to which the first uplink service belongs.

22. The method according to any one of claims 17 to 21, wherein the first information further comprises a first timer, and the first timer is used by the terminal device to report, when the BAT corresponding to the first uplink service changes and the first timer corresponding to the first uplink service expires or does not run, the BAT corresponding to the first uplink service.

23. The method according to any one of claims 17 to 22, wherein the first information further comprises a second timer, and the second timer is used by the terminal device to report, when the second timer expires, the BAT corresponding to the first uplink service.

24. The method according to any one of claims 17 to 22, wherein the first information further comprises a first threshold, and the first threshold is used by the terminal device to report, when a deviation between an expected arrival time and an actual arrival time of a data packet of the first uplink service exceeds the first threshold, the BAT corresponding to the first uplink service.

25. The method according to claim 24, wherein the expected arrival time of the data packet of the first uplink service is determined based on a periodicity of the first uplink service and a reported second BAT, and the second BAT is a BAT reported immediately before the first BAT.

26. The method according to claim 24 or 25, wherein the first information further comprises a third timer, and the third timer is used by the terminal device to report, when the deviation between the expected arrival time and the actual arrival time of the data packet of the first uplink service exceeds the first threshold and the third timer expires or does not run, the BAT corresponding to the first uplink service.

27. The method according to any one of claims 17 to 22, wherein the first information further comprises a second threshold, and the method further comprises:
receiving first indication information from the terminal device, wherein the first indication information indicates that a deviation between an expected arrival time and an actual arrival time of a data packet of the first uplink service exceeds the second threshold;
sending a request message to the terminal device, wherein the request message is used to request the BAT corresponding to the first uplink service; and
receiving, from the terminal device, the BAT corresponding to the first uplink service.

28. The method according to claim 27, wherein the expected arrival time of the data packet of the first uplink service is determined based on a periodicity of the first uplink service and a reported second BAT, and the second BAT is a BAT reported immediately before the first BAT.

29. The method according to claim 27 or 28, wherein the first information further comprises a fourth timer, and the fourth timer is used by the terminal device to send the first indication information when the deviation between the expected arrival time and the actual arrival time of the data packet of the first uplink service exceeds the second threshold and the fourth timer expires or does not run.

30. The method according to any one of claims 17 to 22, wherein the method further comprises:
receiving second indication information from the terminal device, wherein the second indication information indicates that the BAT of a data packet of the first uplink service changes;
sending a request message to the terminal device, wherein the request message is used to request the BAT corresponding to the first uplink service; and
receiving, from the terminal device, the BAT corresponding to the first uplink service.

31. The method according to claim 30, wherein an expected arrival time of the data packet of the first uplink service is determined based on a periodicity of the first uplink service and a reported second BAT, and the second BAT is a BAT reported immediately before the first BAT.

32. The method according to claim 30 or 31, wherein the first information further comprises a fifth timer, and the fifth timer is used by the terminal device to send the second indication information when the expected arrival time and an actual arrival time of the data packet of the first uplink service do not match and the fifth timer expires or does not run.

33. A communication apparatus, comprising a module or a unit configured to perform the method according to any one of claims 1 to 16 or claims 17 to 32.

34. A communication apparatus, comprising a processor, wherein
when the processor invokes a computer program or instructions in a memory, the method according to any one of claims 1 to 16 is performed, or the method according to any one of claims 17 to 32 is performed.

35. A communication apparatus, comprising a logic circuit and an interface, wherein the logic circuit is coupled to the interface; and
the interface is configured to input to-be-processed data, the logic circuit processes the to-be-processed data by using the method according to any one of claims 1 to 16 or claims 17 to 32, to obtain processed data, and the interface is configured to output the processed data.

36. A computer-readable storage medium, comprising:
the computer-readable storage medium is configured to store instructions or a computer program, and when the instructions or the computer program is executed, the method according to any one of claims 1 to 16 is implemented, or the method according to any one of claims 17 to 32 is implemented.

37. A computer program product, comprising instructions or a computer program, wherein
when the instructions or the computer program is executed, the method according to any one of claims 1 to 16 is performed, or the method according to any one of claims 17 to 32 is performed.

38. A communication system, comprising the communication apparatus according to claim 33, the communication apparatus according to claim 34, or the communication apparatus according to claim 35.

39. A communication system, comprising a network device and a terminal device, wherein
the terminal device is configured to perform the method according to any one of claims 1 to 16, and the network device is configured to perform the method according to any one of claims 17 to 32.
